# EUROPEAN PATENT APPLICATION

(11) **EP 4 056 016 A1**
(43) Date of publication of application: **14.09.2022**
(21) Application number: 20908666.9
(22) Date of filing: 10.01.2020
(51) Int. Cl.: A01D 34/00, A01D 69/00

(54) **RIDING LAWNMOWER**

(30) Priority: 31.12.2019 CN 201911401855
(71) Applicant: Nanjing Chervon Industry Co., Ltd., Nanjing, Jiangsu 211106 (CN)
(72) Inventor: WANG, Zhen, Nanjing, Jiangsu 211106 (CN); LIU, Qian, Nanjing, Jiangsu 211106 (CN); GAO, Fan, Nanjing, Jiangsu 211106 (CN); CHEN, Xi, Nanjing, Jiangsu 211106 (CN); NIE, Fangjie, Nanjing, Jiangsu 211106 (CN); YAMAOKA, Toshinari, Nanjing, Jiangsu 211106 (CN); DAI, Cheng, Nanjing, Jiangsu 211106 (CN); WU, Rong, Nanjing, Jiangsu 211106 (CN)
(74) Representative: Sun, Yiming
(86) International application number: PCT/CN2020/071419
(87) International publication number: WO 2021/134826

(57) **Abstract**

A riding mower is provided. The riding mower includes a seat, a main frame, a mowing element, a traveling assembly, and an operating assembly. The seat is for a user to sit on. The main frame extends in the direction of a first straight line and is configured to carry the seat. The mowing element is configured to mow vegetation. The traveling assembly is configured to enable the riding mower to travel. The operating assembly is configured to be operated by the user to control the riding mower to travel and output power. The traveling assembly includes a first traveling wheel, a second traveling wheel, a first drive assembly, and a second drive assembly. The first drive assembly and the second drive assembly are configured to drive the second traveling wheel to rotate. The first drive assembly and the second drive assembly are connected to the main frame by a connector and are disposed symmetrically about a symmetry plane parallel to the direction of the first straight line. The traveling assembly further includes a connection plate disposed in the direction of a line perpendicular to the direction of the first straight line and perpendicular to the symmetry plane. The connection plate connects the first drive assembly and the second drive assembly and enables the first drive assembly and the second drive assembly to be connected into a whole. The traveling assembly of the riding mower has high structural strength and strong adaptability.

## Description

The present disclosure claims priority to Chinese Patent Application No. 201911401855.4 filed with the China National Intellectual Property Administration (CNIPA) on Dec. 31, 2019, the disclosure of which is incorporated herein by reference in its entirety.

### TECHNICAL FIELD

The present application relates to a riding mower.

### BACKGROUND

As a garden tool, a mower is widely applied to fields including mowing a lawn and vegetation. A riding mower in the related art is a small engineering machine that can be driven by one person. Generally, special functions of the riding mower determine the special structure of the riding mower. Due to the specific working environment and relatively complicated working terrain, the riding mower in the related art causes a user to encounter relatively great ups and downs during operation. As for riding mowers, under the premise of satisfying various performance requirements, functional requirements, and safety requirements, how to provide a riding mower with a simple structure, high structural strength and good stability becomes an urgent problem to be solved at present.

### SUMMARY

The present application provides a riding mower with high structural strength.

The present application adopts the technical solutions below.

A riding mower is provided. The riding mower includes a seat, a main frame, a mowing element, a traveling assembly, and an operating assembly. The seat is for a user to sit on. The main frame extends in the direction of a first straight line and is configured to carry the seat. The mowing element is configured to mow vegetation. The traveling assembly is configured to enable the riding mower to travel. The operating assembly is configured to be operated by the user to control the riding mower to travel and output power. The traveling assembly includes a first traveling wheel, a second traveling wheel, a first drive assembly, and a second drive assembly. The first drive assembly and the second drive assembly are configured to drive the second traveling wheel to rotate. The first drive assembly and the second drive assembly are connected to the main frame by a connector and are disposed symmetrically about a symmetry plane parallel to the direction of the first straight line. The traveling assembly further includes a connection plate disposed in the direction of a line perpendicular to the direction of the first straight line and perpendicular to the symmetry plane. The connection plate connects the first drive assembly and the second drive assembly and enables the first drive assembly and the second drive assembly to be connected into a whole.

Optionally, the first drive assembly and the second drive assembly each include a gearbox. The connection plate is connected to the gearbox.

Optionally, when the connection plate is connected to the first drive assembly and the second drive assembly, an accommodation space that separates at least part of the upper space of the main frame from at least part of the lower space of the main frame and that is located on the lower side of the main frame is formed. The first drive assembly and the second drive assembly are disposed in the accommodation portion.

Optionally, the connection plate includes a first connection plate and a second connection plate.

The first connection plate is disposed on the upper side of the first drive assembly and on the upper side of the second drive assembly.

The second connection plate is disposed on the lower side of the first drive assembly and on the lower side of the second drive assembly.

Optionally, an accommodation space is formed between the first connection plate and the second connection plate. The first drive assembly and the second drive assembly are disposed in the accommodation space.

Optionally, the first connection plate and the second connection plate are disposed in parallel in an up and down direction perpendicular to the first straight line.

Optionally, the first connection plate and the second connection plate are staggered in a straight-line direction perpendicular to the first straight line.

Optionally, the riding mower further includes a control circuit configured to control the first drive assembly and the second drive assembly and connected by a connection line.

Optionally, the connection line is disposed in the accommodation space.

Optionally, the connection line is disposed on the rear side of the first drive assembly in the accommodation space and on the rear side of the second drive assembly in the accommodation space.

A riding mower is provided. The riding mower includes a seat, a main frame, a mowing element, a traveling assembly, and an operating assembly. The seat is for a user to sit on. The main frame is configured to carry the seat. The mowing element is configured to mow vegetation. The traveling assembly is configured to enable the riding mower to travel. The operating assembly is configured to be operated by the user to control the riding mower to travel. The riding mower further includes a power supply apparatus. The power supply apparatus is disposed on the rear end of the main frame. The power supply apparatus includes a battery pack able to provide energy and a battery compartment configured to accommodate the battery pack. The battery compartment includes a main compartment configured to accommodate the battery pack and a compartment cover configured to at least partially enclose the main compartment. The compartment cover includes a first cover and a second cover. The first cover includes a body and a grid spreading around the body.

Optionally, the first cover and the second cover are detachably connected to each other.

Optionally, the second cover is a transparent member.

Optionally, a second reinforcing rib is disposed on the side of the second cover facing the main compartment.

Optionally, a first reinforcing rib is disposed on the side of the first cover facing the main compartment. The first cover is disposed on the side facing the main compartment. The second cover is disposed on the side of the first cover facing away from the main compartment. The second cover at least partially covers the first cover.

Optionally, the grid is formed by through holes extending through the first cover.

Optionally, the body is Y-shaped. The grid connects the body and the edge of the first cover.

Optionally, the riding mower further includes a support base. The power supply apparatus is connected to the main frame by a group of support bases.

Optionally, the support base includes a support portion configured to support the power supply apparatus, a first connection portion configured to connect the power supply apparatus, and a second connection portion configured to connect the main frame.

Optionally, a buffer is disposed between the power supply apparatus and the main frame.

A riding mower is provided. The riding mower includes a seat, a main frame, a mowing element, a traveling assembly, and an operating assembly. The seat is for a user to sit on. The main frame is configured to carry the seat. The mowing element is configured to mow vegetation. The traveling assembly is configured to enable the riding mower to travel. The operating assembly is configured to be operated by the user to control the riding mower to travel and output power. The riding mower further includes a power supply apparatus disposed on the rear end of the main frame. The power supply apparatus includes a battery pack able to provide energy and a battery compartment configured to accommodate the battery pack. The battery compartment includes a main compartment configured to accommodate the battery pack and a compartment cover configured to at least partially enclose the main compartment. The compartment cover is provided with a fastener locked to the main compartment. The main compartment is formed with a matching stop portion. The fastener includes a locking portion. The side of the locking portion facing the stop portion includes a first edge and a second edge. An included angle between the first edge and the second edge is greater than or equal to 60° and less than or equal to 90°.

Optionally, the included angle between the first edge and the second edge is 90°.

Optionally, the main compartment is formed with a through hole for the locking portion to extend through. The stop portion extends along the through hole.

Optionally, the stop portion is formed with a channel for the locking portion to go through and a protrusion matching the locking portion.

Optionally, the compartment cover is formed with an accommodation recess configured to accommodate the fastener.

Optionally, the fastener further includes a pivot portion and an operating portion. The pivot portion is for the fastener to rotate around. The pivot portion is connected to the accommodation recess by a group of connection structures. The operating portion is disposed between the pivot portion and the locking portion.

Optionally, the riding mower further includes an elastic member disposed between the fastener and the compartment cover.

Optionally, the locking portion has a first position and a second position that are relative to the stop portion.

When the locking portion is at the first position, a locking hook abuts the stop portion and is able to hook the stop portion. When the locking portion is at the second position, the locking hook is disengaged from the stop portion.

Optionally, the compartment cover is connected to the main compartment by a first connector and a second connector. The first connector is disposed on an end of the compartment cover and on an end of the main compartment. The compartment cover is able to rotate around the first connector and relative to the main compartment. The second connector is connected to the middle of the compartment cover and the middle of the main compartment. The second connection portion is configured to support the compartment cover to make the compartment cover opened or closed relative to the main compartment.

Optionally, the second connector includes a first connection end and a second connection end. The first connection end is disposed on the compartment cover. The second connection end is disposed on the main compartment. A gas spring able to support the compartment cover to make the compartment cover opened or closed relative to the main compartment is disposed between the first connection end and the second connection end.

A riding mower is provided. The riding mower includes a main frame, a mowing element, a traveling assembly, and an operating assembly. The mowing element is configured to mow vegetation. The traveling assembly is configured to enable the riding mower to travel. The operating assembly is configured to be operated by the user to control the riding mower to travel and output power. The traveling assembly includes a first traveling wheel, a second traveling wheel, a first drive assembly, and a second drive assembly. The first drive assembly and the second drive assembly are configured to drive the second traveling wheel to rotate. The first drive assembly and the second drive assembly each include a drive motor, a gear mechanism, an output shaft, and a gearbox. The drive motor is configured to output a driving force. The gear mechanism is connected to the drive motor. The output shaft is configured to connect the gear mechanism and the second traveling wheel and is able to drive the second traveling wheel to rotate. The gearbox is configured to accommodate the gear mechanism and the output shaft. The gear mechanism includes a transmission gear connected to the output shaft. The output shaft is further connected to the gearbox by a first connection assembly. The first connection assembly includes a first bearing and a retainer. The first bearing is distributed in the axial direction of the output shaft. The retainer is disposed between the first bearing and the transmission gear.

Optionally, the retainer and the first bearing are sleeved on the output shaft. The riding mower further includes a second bearing configured to secure the output shaft and disposed on the end of the output shaft facing the second traveling wheel.

Optionally, the retainer is a ring disposed around the output shaft. The ring is provided with thrust rollers able to rotate freely on the ring.

Optionally, the first connection assembly further includes a first gasket and a second gasket. The first gasket and the second gasket are disposed between the first bearing and the retainer.

Optionally, when the second gasket abuts the retainer, the thrust rollers are able to rotate relative to the second gasket.

Optionally, the output shaft is formed with a protrusion portion. The protrusion portion is disposed between the transmission gear and the second traveling wheel and adjacent to the transmission gear.

Optionally, the protrusion portion is disposed around the output shaft. The diameter of the protrusion portion is greater than the diameter of the output shaft.

Optionally, the gearbox is formed with an accommodation recess. The protrusion portion is disposed in the accommodation recess.

Optionally, the riding mower further includes a sleeve disposed on the side of the protrusion portion facing away from the transmission gear.

Optionally, the riding mower further includes a third gasket disposed between the protrusion portion and the sleeve.

A riding mower is provided. The riding mower includes a seat, a main frame, a power output assembly, a traveling assembly, an operating assembly, a control module, and a power supply apparatus. The seat is for a user to sit on. The main frame extends in the direction of a first straight line and is configured to carry the seat. The power output assembly is configured to mow vegetation. The traveling assembly is configured to enable the riding mower to travel. The operating assembly is configured to be operated by the user to control the riding mower to travel and output power. The control module is configured to control the riding mower. The power supply apparatus is configured to supply power to the riding mower. The main frame extends basically in a first plane. The first straight line is in the first place. The main frame is basically symmetrical about the first straight line. The first plane further includes a second straight line perpendicular to the first straight line. The main frame is basically symmetrical about the second straight line. On a second plane extending through the second straight line and perpendicular to the first plane, the seat is disposed on the main frame and at least partially extends through the second plane. The first straight line and the second straight line have an intersection. The control module is at least partially disposed in the range of the intersection.

Optionally, the operating assembly includes a first operating element and a second operating element. The first operating element is disposed on two sides of the seat. The second operating element is disposed on the front side of the main frame and is located on the left side of the main frame.

Optionally, the riding mower further includes a grass catcher. The power supply apparatus is disposed on the rear side of the main frame. The grass catcher is at least partially disposed on the upper side of the power supply apparatus.

Optionally, the riding mower further includes a group of connection rods connected to the main frame. The connection rods are configured to support the grass catcher.

Optionally, the riding mower includes a grass catching mode and a grass discharging mode. When the riding mower is in the grass catching mode, the grass catcher is disposed on the upper side of the power supply apparatus. When the riding mower is in the grass discharging mode, the grass catcher is detached from the connection rods. The connection rods are connected to a sunshade configured to shade from the sun.

Optionally, the connection rods are disposed between the seat and the power supply apparatus.

Optionally, the traveling assembly includes a first traveling wheel and a second traveling wheel. The first traveling wheel is disposed on the front side of the main frame. The second traveling wheel is disposed on the rear side of the main frame. The power output assembly is disposed between the first traveling wheel and the second traveling wheel and is at least partially located on the lower side of the main frame. The power supply apparatus is disposed on the rear side of the second traveling wheel and is located on the upper side of the main frame.

Optionally, the control module includes a drive control board, a power supply management module, and a fuse. The drive control board is at least partially disposed at the intersection between the first straight line and the second straight line. The power supply management module is at least partially disposed between the seat and the power supply apparatus. The fuse is disposed between the drive control board and the power supply management module.

Optionally, the drive control board, the fuse, and the power supply management module are basically arranged in the direction of the first straight line.

Optionally, the control module further includes a junction box disposed on the upper side of the drive control board.

A riding mower is provided. The riding mower includes a seat, a main frame, a mowing element, a traveling assembly, an operating assembly, and a power supply apparatus. The seat is for a user to sit on. The main frame is configured to carry the seat. The mowing element is configured to mow vegetation. The traveling assembly is configured to enable the riding mower to travel. The operating assembly is configured to be operated by the user to control the riding mower to travel and output power. The power supply apparatus is configured to supply power to the riding mower. The main frame is disposed in a first plane and extends in the direction of a first straight line. When being mounted, the power supply apparatus is located in an extension plane of the main frame. The main frame is provided with an anti-collision rod disposed around the power supply apparatus and located on an outer side of the main frame.

Optionally, the anti-collision rod is connected to the rear side of the main frame and is basically semicircular.

Optionally, the cross section of the anti-collision rod is circular.

Optionally, the main frame includes a first rod, a second rod, and a third rod. The first rod and the second rod are parallel to each other. The third rod is disposed on the front end of the first rod and on the front end of the second rod. The first rod, the second rod, and the third rod are securely connected or integrally formed.

Optionally, the third rod is formed with or is connected to a connection hole configured to connect the traveling assembly. The junction between the third rod and the first rod and the junction between the third rod and the first rod are each provided with a reinforcing portion.

Optionally, the anti-collision rod is connected to the first rod and the second rod.

Optionally, the riding mower further includes a first connection plate and a second connection plate that connect the first rod and the second rod. The first connection plate is parallel to or intersects the second connection plate.

Optionally, the first connection plate extends in a plane and is formed with a pedal portion configured for being pressed down.

Optionally, in a projection plane perpendicular to the up and down direction, a projection of the main frame in the up and down direction in the projection plane is basically rectangular.

Optionally, the cross section of the main frame is rectangular.

A riding mower is provided. The riding mower includes a seat, a main frame, a power output assembly, a traveling assembly, and an operating assembly. The seat is for a user to sit on. The main frame is configured to carry the seat. The power output assembly is connected to the main frame and includes a mowing element and a first motor. The mowing element is configured to output power to implement the mowing function. The first motor is configured to drive the mowing element to output power. The traveling assembly is at least able to drive the electric riding mower to travel in the direction of a first straight line on the ground. The traveling assembly includes a second motor configured to drive the traveling assembly. The operating assembly is configured to be operated by the user to control the riding mower to travel and output power. The riding mower further includes a parking system enabling the riding mower to switch between a parking state and a non-parking state. When the parking system is locked, the riding mower is in the parking state. When the parking system is not locked or is unlocked, the riding mower is in the non-parking state. The riding mower further includes a rotation stop system linked to the parking system. When the parking system enters a locked state from an unlocked state, the rotation stop system is triggered and controls the second motor to stop rotation.

Optionally, the parking system includes a pedal assembly, a base, a ratchet, and a first elastic member. The pedal assembly is configured to be operated by the user to implement a switch between the parking state and the non-parking state. The base is configured to be mounted with the pedal assembly. The ratchet is securely connected to the pedal assembly. The first elastic member connects the pedal assembly and the base.

Optionally, the pedal assembly includes a pedal, a first rotatable member, and a pedal arm. The pedal is for the user to press down. The first rotatable member connects the pedal assembly and is rotatable around a central axis synchronously. Two ends of the pedal arm are securely connected to the pedal and the first rotatable member respectively.

Optionally, the rotation stop system includes a triggering member, a contact member, and a rotation stop switch. The triggering member is formed with or connected to a triggering portion. The contact member matches the triggering portion. The rotation stop switch matches the contact member and, when being triggered by the contact member, controls the second motor to stop rotation.

Optionally, the triggering member and the first rotatable member are configured to rotate synchronously.

Optionally, the triggering member includes a first section and a second section. The triggering portion is disposed on the second section.

Optionally, the base is provided with a slide rail extending through the base. The triggering member is connected to the first rotatable member by a fastening piece. The triggering member is disposed on one side of the base. The first rotatable member is disposed on another side of the base.

Optionally, the slide rail includes a first slide rail and a second slide rail that are disposed in different rotation radii.

Optionally, the length of the first slide rail is smaller than the length of the second slide rail.

Optionally the rotation stop switch is configured to control the second motor to stop rotation when the rotation stop switch is held in a triggered state.

In the present application, the arrangement in which the connection plate is disposed between the first drive assembly and the second drive assembly helps enhance the structural strength of the entire traveling assembly, enabling the riding mower to adapt to more complicated working conditions.

### BRIEF DESCRIPTION OF DRAWINGS

FIG. 1 is a perspective view of a riding mower.
FIG. 2 is a perspective view taken from another angle to illustrate the riding mower of FIG. 1 without a grass catcher.
FIG. 3 is a perspective view illustrating a power supply apparatus of the riding mower of FIG. 1 is disposed on a main frame of the riding mower of FIG. 1
FIG. 4 is a perspective view of the power supply apparatus of the riding mower of FIG. 1.
FIG. 5 is an exploded view of the connection relationship between the power supply apparatus of the riding mower of FIG. 3 and the main frame of the riding mower of FIG. 3.
FIG. 6 is a perspective view illustrating that a compartment cover of the power supply apparatus of the riding mower of FIG. 4 is opened.
FIG. 7 is a partial enlarged view of position A of the riding mower of FIG. 6.
FIG. 8 is an exploded view of the power supply apparatus of the riding mower of FIG. 6.
FIG. 9 is an exploded view of the power supply apparatus of the riding mower of FIG. 8 from another perspective.
FIG. 10 is a perspective view of a fastener of the power supply apparatus of the riding mower of FIG. 9.
FIG. 11 is a partial enlarged view of position B of the riding mower of FIG. 9.
FIG. 12 is a section view of the power supply apparatus of the riding mower of FIG. 4.
FIG. 13 is a partial enlarged view of position C of the riding mower of FIG. 12.
FIG. 14 is an exploded view of the compartment cover of the power supply apparatus of the riding mower of FIG. 8.
FIG. 15 is an exploded view taken from another angle to illustrate the compartment cover of the power supply apparatus of the riding mower of FIG. 14.
FIG. 16 is a perspective view illustrating the main frame of the riding mower of FIG. 1 is connected to a traveling assembly of the riding mower of FIG. 1.
FIG. 17 is a perspective view of second traveling wheels of the riding mower of FIG. 16 and drive assemblies disposed on the second traveling wheels.
FIG. 18 is a rear view of the second traveling wheels of the riding mower of FIG. 17 and the drive assemblies disposed on the second traveling wheels.
FIG. 19 is a partial enlarged view of position D of the riding mower of FIG. 17.
FIG. 20 is a section view of part of a second traveling wheel of the riding mower of FIG. 17 and part of the drive assemblies disposed on the second traveling wheel.
FIG. 21 is a partial enlarged view of position E of the riding mower of FIG. 20.
FIG. 22 is an exploded view of part of a second traveling wheel of the riding mower of FIG. 17 and part of the drive assemblies disposed on the second traveling wheel.
FIG. 23 is a perspective view of a retainer of the riding mower of FIG. 22.
FIG. 24 is a partial enlarged view of position F of the riding mower of FIG. 22.
FIG. 25 is an exploded view of an output shaft of the riding mower of FIG. 22.
FIG. 26 is a top view of the riding mower of FIG. 1 with a seat and part of a cover excluded.
FIG. 27 is a perspective view illustrating a control module is mounted on the main frame of the riding mower of FIG. 26.
FIG. 28 is a top view illustrating the control module is mounted on the main frame of the riding mower of FIG. 22.
FIG. 29 is a partial enlarged view of position G of the riding mower of FIG. 28.
FIG. 30 is a perspective view of the main frame of the riding mower of FIG. 26.
FIG. 31 is a front view of a parking system of the riding mower of FIG. 1.

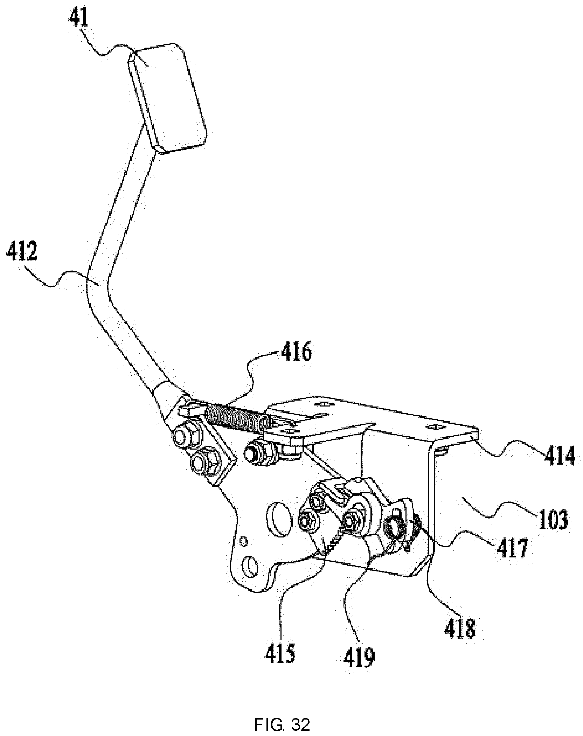

FIG. 32 is a front view of a parking system of the riding mower of FIG. 31.

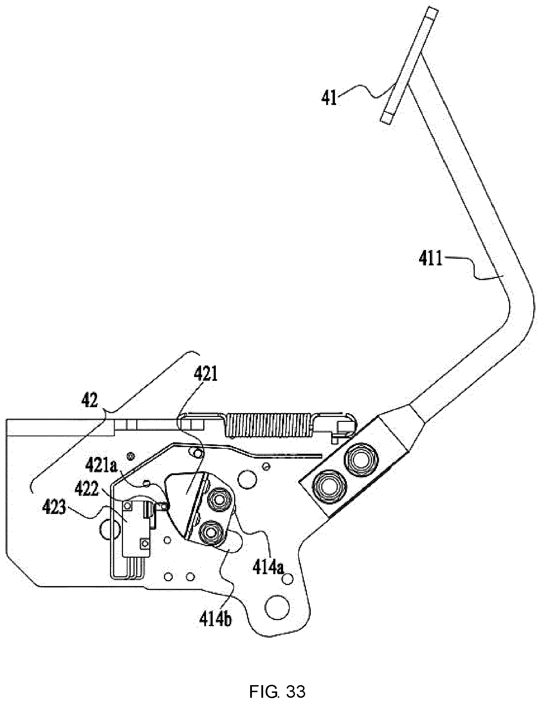

FIG. 33 is a front view of a rotation stop system of the riding mower of FIG. 1.

### DETAILED DESCRIPTION

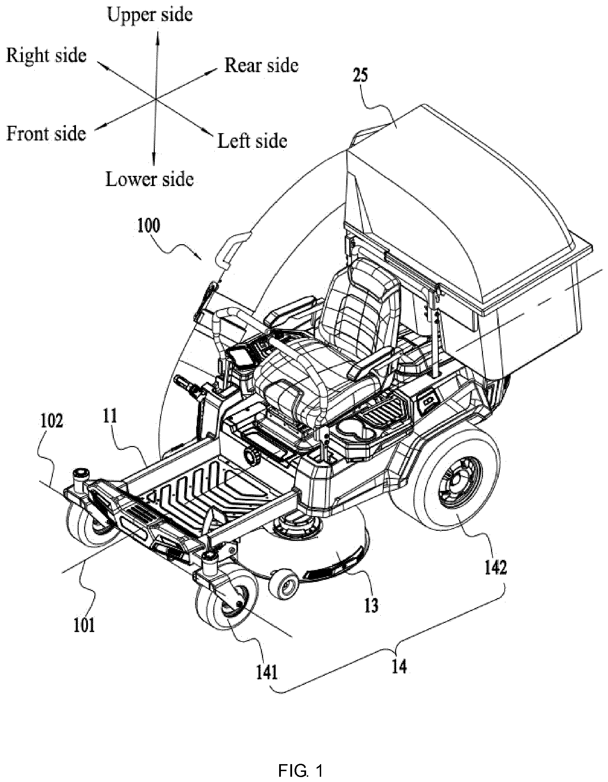

An electric riding machine shown in FIG. 1 may be an electric machine for working indoors or outdoors. In this embodiment, a riding mower 100 is taken as an example of the electric riding machine. A user can sit on the riding mower 100 to control the riding mower 10 to trim, for example, a lawn and vegetation.

It is to be understood that the electric riding machine may also be a tool of another type. The electric riding machine may be an electric riding vehicle, for example, an all-terrain vehicle or a golf cart. Alternatively, the electric riding machine may be an electric riding tool with its function implemented through outputting a certain form of power, for example, a riding snowplow or a riding agricultural machine. Of course, it is to be understood that the electric riding machine may be a tool for other purposes, for example, a riding mopping vehicle or a riding forklift. In fact, as long as including the substantive content of the description hereinafter in the present application, these tools all fall within the scope of the present application.

To facilitate the description of technical solutions in the present application, a riding mower is taken as an example. Moreover, a front side, a rear side, a left side, a right side, an upper side, and a lower side shown in FIG. 1 are further defined.

As shown in FIG. 1, the riding mower 100 includes a main frame 11, a seat 12, a power output assembly 13, a traveling assembly 14, an operating assembly 15, and a power supply apparatus 16.

The main frame 11 is configured to carry the seat 12, the power output assembly 13, the traveling assembly 14, the operating assembly 15, and the power supply apparatus 16. The main frame 11 at least partially extends in the direction of a first straight line 101 parallel to the front and rear direction. The preceding assemblies and apparatuses are reasonably distributed to various parts of the main frame.

The power output assembly 13 includes an output member configured to output power to implement the mechanical function. For example, in this embodiment, the output member may be a mowing element. The power output assembly 13 is further connected to the main frame 11. In this embodiment, the power output assembly 13 is mounted on the lower side of the main frame 11. The power output assembly 13 further includes a first motor and a chassis. The mowing element is configured to implement the mowing function. The first motor is configured to drive the mowing element to rotate at a high speed. The chassis is formed with an accommodation space configured to accommodate at least part of the motor and part of the mowing element. The power output assembly may include more than one mowing element. Correspondingly, the number of first motors may correspond to the number of mowing elements.

The traveling assembly 14 is configured to enable the riding mower 100 to travel on the lawn. The traveling assembly 14 may include first traveling wheels 141 and second traveling wheels 142. In the front and rear direction, the first traveling wheels 141 are disposed on the front side of the second traveling wheels 142. In this embodiment, the number of the first traveling wheels 141 is two, and the number of the second traveling wheels 142 is also two. In the direction of the first straight line 101, the power output assembly 13 is at least partially disposed between the first traveling wheels 141 and the second traveling wheels 142. Moreover, in the direction of the first straight line 101, the seat 12 is also at least partially disposed between the first traveling wheels 141 and the second traveling wheels 142. In this case, the center of gravity of the entire mower is located between the first traveling wheels 141 and the second traveling wheels 142 and in the direction of the first straight line 101, thereby improving the balance performance of the entire mower. A first traveling wheel 141 may be an Omni wheel rotatable around a first axis 102 and has a first diameter. The traveling assembly 14 further includes a second motor configured to drive the second traveling wheels 142 to rotate around a second axis. The number of second motors is also two. In this case, when the two second motors drive the corresponding second traveling wheels 142 to rotate at different rotational speeds, a speed difference is generated between the two second traveling wheels 142, thereby causing the riding mower 100 to turn. A second traveling wheel 142 has a second diameter. The second diameter of a second traveling wheel 142 is greater than the first diameter of a first traveling wheel 141.

The operating assembly 15 is configured to be operated by the user to control the riding mower 100 to travel and output power. The operating assembly 15 may include a first operating element 151 and a second operating element 152. The first operating element 152 is configured to be operated manually by the user to start the motors so as to control the mowing element to mow the grass and control the riding mower 100 to travel on the lawn. The second operating element 152 is for the user to press down so as to control the running state of the mower.

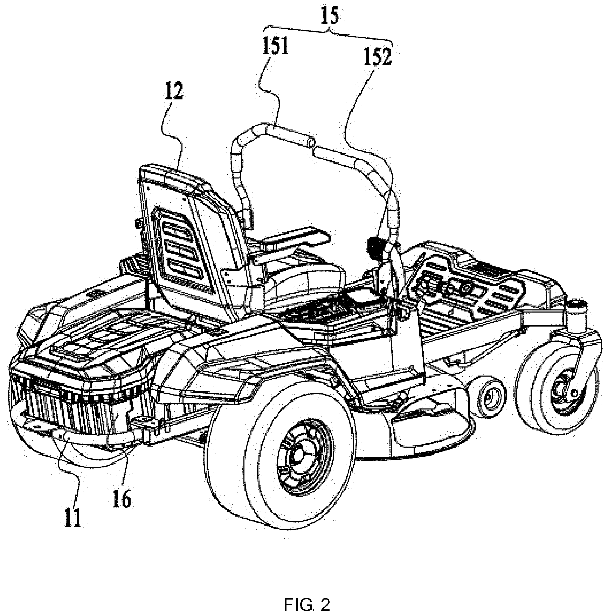

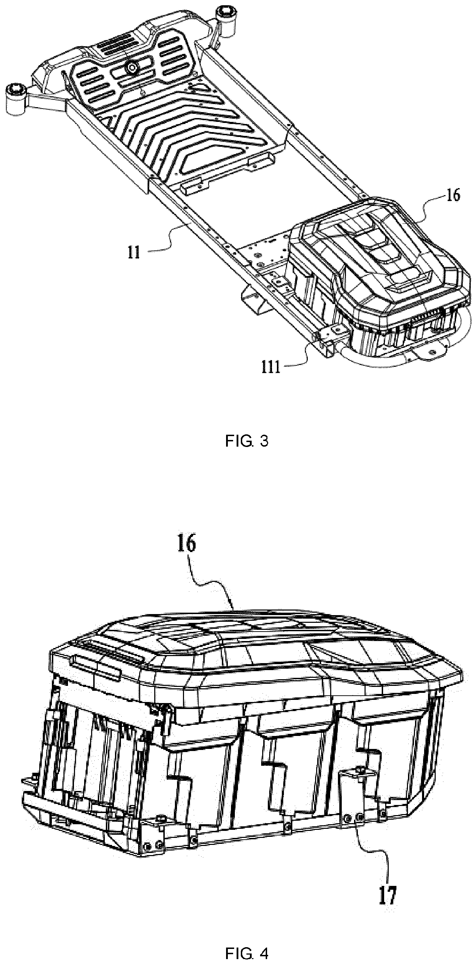

As shown in FIGS. 2 and 3, the power supply apparatus 16 is configured to supply power to the power output assembly 13 and the traveling assembly 14. The power supply apparatus 16 is disposed on the main frame 11 and is detachable from the main frame 11. In some embodiments, the power supply apparatus 16 is disposed in the rear of the main frame 11. The power supply apparatus 16 matches other components disposed in the front and middle of the main frame 11 so that the center of gravity of the riding mower 100 is located between the first traveling wheels 141 and the second traveling wheels 142 and in the direction of the first straight line 101. Accordingly, the center of gravity of the riding mower 100 is more stable, preventing the riding mower 100 from overturning when extending through a steep uphill or downhill.

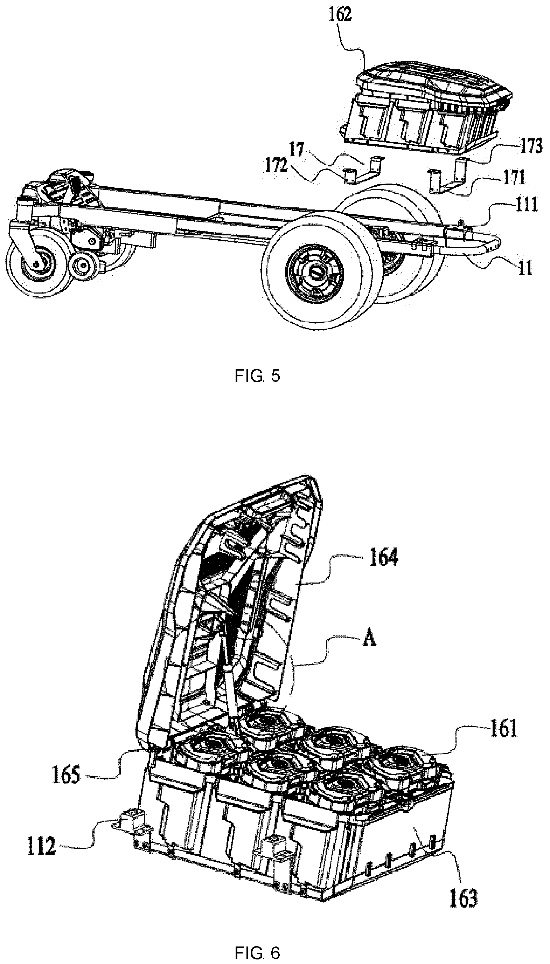

As shown in FIGS. 4 and 5, the power supply apparatus 16 is connected to the main frame 11 by a group of support bases 17. A support base 17 includes a support portion 171 configured to support the power supply apparatus 16, a first connection portion 172, and a second connection portion 173. The first connection portion 172 is configured to connect the power supply apparatus 16. The second connection portion 173 is configured to connect the main frame 11. The first connection portion 172 is connected to a bottom end of the power supply apparatus 16 through a connector. The second connection portion 173 is connected to the main frame 11 through a connector. Optionally, the main frame 11 is further provided with a connection mechanism 111. The connection mechanism 111 serves as an intermediate member disposed on the main frame 11, protecting the structural strength of the main frame 11 and guaranteeing the stability of the connection between the power supply apparatus 16 and the main frame 11. It is to be understood that the main frame 11 may be provided with no connection mechanism and directly connected to the main frame 11. In an alternative embodiment, each connector may be a screw, and the first connection portion 172 and the second connection portion 173 may be each provided with a screw hole. It is to be understood that the first connection portion 172 and second connection portion 173 may be disposed in any manner as long as the power supply apparatus 16 can be detachably connected to the main frame 11 and a stable connection can be ensured.

During the running process of the riding mower, when the road condition is relatively complicated, the riding mower generates a relatively large vibration. When such vibration is transmitted to the main frame 11 and when the main frame 11 transmits the vibration to a connection piece of a battery pack 161, it is easy to cause a poor contact between the battery pack 161 and the connection piece of the battery pack 161, thereby causing a potential hazard of bad ignition. In order to avoid the existence of bad ignition, the power supply apparatus 16 is provided with a certain buffer function which can basically absorb the vibration from the main frame 11. A buffer 112 is disposed in junctions between the support bases 17 and the main frame 11 so that the power supply apparatus 16 adapts to relatively violent vibration. The buffer 112 greatly mitigates the relative movement between the power supply apparatus 16 and the support bases 17. In some embodiments, the buffer 112 is disposed between second connection portions 173 and the main frame 11, effectively absorbing the vibration from the main frame 11 and preventing the vibration from the main frame 11 from being transmitted to the power supply apparatus 16. In another alternative embodiment, the buffer 112 may be also disposed in any junction between the power supply apparatus 16 and the main frame 11, as long as the vibration from the main frame 11 can be absorbed and prevented from being transmitted to the battery pack 161. The buffer 112 may be an elastic member 1675, a rubber member, or another component with the buffer function. When the buffer 112 is provided, the buffer function required by the power supply apparatus 16 is greatly weakened. This arrangement simplifies the structure of the power supply apparatus 16 and reduces the assembly requirements of the power supply apparatus 16.

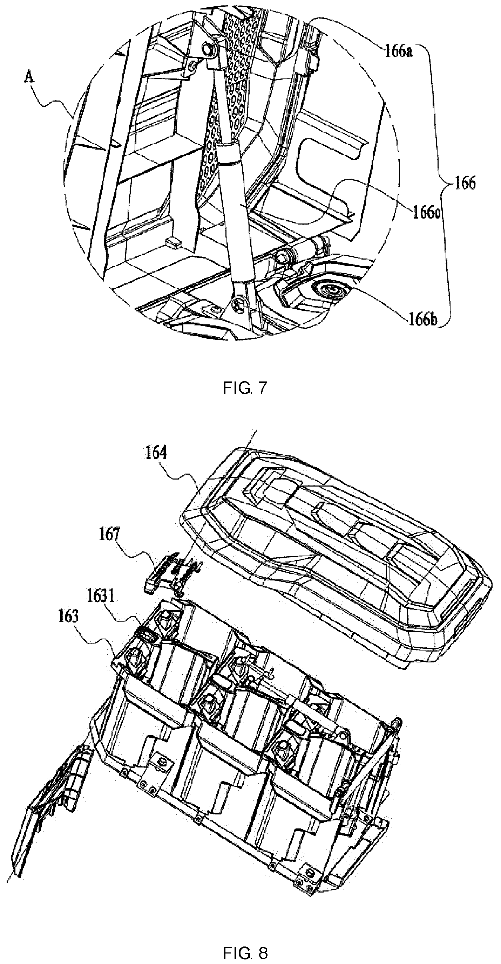

As shown in FIGS. 6 and 7, the power supply apparatus 16 includes the battery pack 161 and a battery compartment 162. The battery compartment 162 is formed with an accommodation space configured to accommodate the battery pack 161. The battery compartment 162 includes a main compartment 163 and a compartment cover 164. The main compartment 163 is formed with the accommodation space configured to accommodate the battery pack 161. The compartment cover 164 is configured to be rotatably connected to the main compartment 163 and is able to at least partially enclose the main compartment 163. In some embodiments, the compartment cover 164 and the main compartment 163 include a first connector 165 and a second connector 166. The first connector 165 is disposed on an end of the compartment cover 164 and on an end of the main compartment 163. The compartment cover 164 is able to rotate around the first connector 165. The second connector 166 includes a first connection end 166a and a second connection end 166b. The first connection end 166a is disposed in the middle of the compartment cover 164. The second connection end 166b is disposed on the side of the main compartment 163 facing the first connector 165. A gas spring 166c is disposed between the first connection end 166a and the second connection end 166b. The gas spring 166c can rotate around the first connection end 166a and the second connection end 166b. The gas spring 166c is pre-charged with gas. When the compartment cover 164 is lifted to a preset angle, the gas spring 166c outputs a thrust so as to support the compartment cover 164 to automatically rotate around the first connector 165 to a fully open state. In this case, the battery pack 161 can be detached or mounted. When the compartment cover 164 is closed to a preset angle, the gas spring 166c outputs a thrust so as to support the compartment cover 164 to make the compartment cover 164 to automatically rotate around the first connector 165 until the compartment cover 164 is fully closed. In fact, the second connector 166 has a stop of a thrust that cannot be output. When the user opens or closes the compartment cover 164, the user needs to manually push the compartment cover 164 across the stop so that the gas spring 166c can automatically output a thrust.

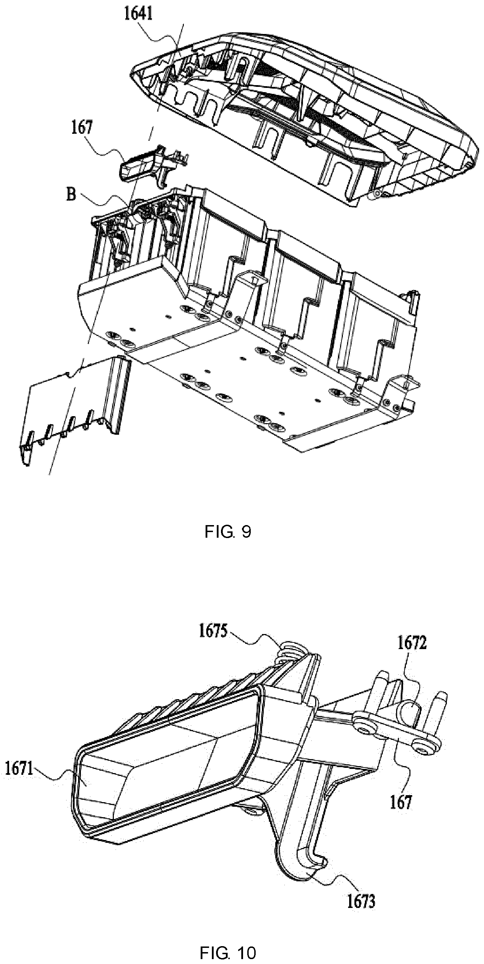

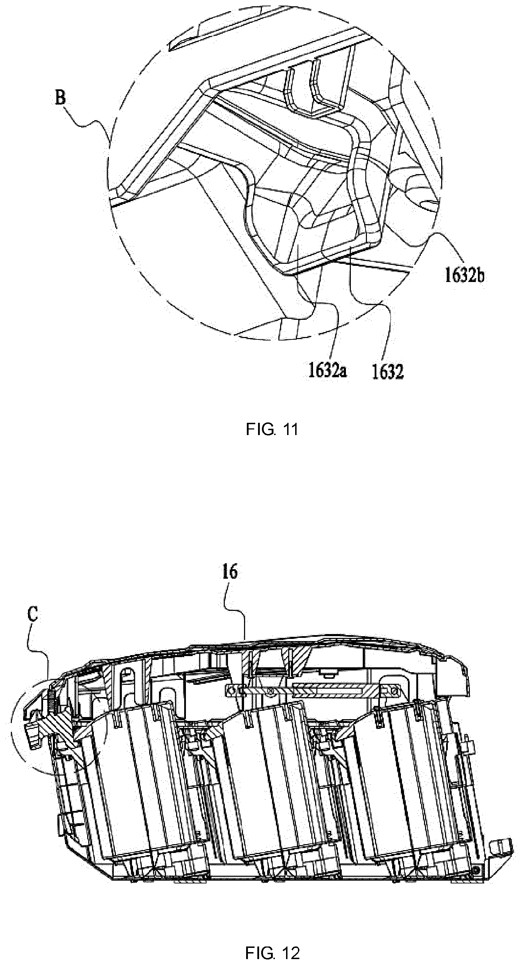

As shown in FIGS. 8 to 13, in an embodiment, the compartment cover 164 is further provided with a fastener 167 configured to lock the compartment cover 164 to the main compartment 163. In some embodiments, the fastener 167 includes an operating portion 1671, a pivot portion 1672, and a locking portion 1673. The operating portion 1671 is disposed between the pivot portion 1672 and the locking portion 1673 and is configured to be operated by the user to open or close the compartment cover 164. The pivot portion 1672 is configured to connect the fastener 167 to the compartment cover 164 and is for the fastener 167 to rotate around. The locking portion 1673 is configured to lock the compartment cover 164 to the main compartment 163. In some embodiments, the compartment cover 164 is provided with an accommodation recess 1641. The accommodation recess 1641 is configured to accommodate at least part of the pivot portion 1672 and enable the pivot portion 1672 to rotate in the accommodation recess 1641. The pivot portion 1672 is secured to the accommodation recess 1641 through a group of connection assemblies 1674. In some embodiments, a connection assembly 1674 includes a pair of screws and a connection piece. The screws are configured to secure the connection piece to the compartment cover 164 and restrict the pivot portion 1672 from sliding out of the accommodation recess 1641 when the pivot portion 1672 is mounted onto the accommodation recess 1641. The locking portion 1673 is a locking hook extending from the fastener 167. The main compartment 163 is further formed with a through hole 1631 and a stop portion 1632. The through hole 1631 is for the locking portion 1673 to extend through. The stop portion 1632 matches the locking hook. In some embodiments, the locking portion 1673 includes an inner side edge and an outer side edge. The inner side edge abuts the stop portion 1632 and includes a first edge 1673a and a second edge 1673b. The first edge 1673a and the second edge 1673b obliquely intersect each other and form an included angle. The included angle α between the first edge 1673a and the second edge 1673b may be an acute angle. In some embodiments, the included angle α is greater than or equal to 60° and less than or equal to 90°. In a preferred embodiment, when the included angle α between the first edge 1673a and the second edge 1673b is 90°, the locking effect of the locking portion 1673 is relatively sound. The stop portion 1632 extends out of the through hole 1631 and is formed with a channel and a protrusion. The channel is for the locking portion 1673 to go through. The protrusion engages with the locking portion 1673. In fact, the stop portion 1632 includes a first surface 1632a and a second surface 1632b. After extending through the through hole 1631, the locking portion 1673 has a first position matching the stop portion 1632 and a second position away from the stop portion 1632. When the locking portion 1673 is at the first position, the locking hook abuts the stop portion 1632 and is able to hook the stop portion 1632. In this case, the locking hook slides from the first surface 1632a of the stop portion 1632 to the second surface 1632b of the stop portion 1632 and is at least partially held on the second surface 1632b, thereby enabling the compartment cover 164 to be locked to the main compartment 163. When the locking portion 1673 is at the second position, the locking hook is disengaged from the stop portion 1632. In this case, the locking hook is disengaged from the second surface 1632b of the stop portion 1632 to the first surface 1632a of the stop portion 1632 and is disengaged from the through hole 1631 of the main compartment 163, and the compartment cover 164 is rotatable around the first connector 165 to any open position.

In an alternative embodiment, the fastener 167 is further provided with an elastic member 1675 configured to provide an elastic force when the locking portion 1673 is at the second position so that the locking portion 1673 can be held at the second position, thereby enabling the compartment cover 164 to be locked to the main compartment 163. In some embodiments, the fastener 167 is formed with a stop protrusion 1676. One end of the elastic member 1675 is sleeved on the stop protrusion 1676. The other end of the elastic member 1675 is disposed in the accommodation recess 1641 of the compartment cover 164. In some embodiments, the elastic member 1675 is disposed on the end of the fastener 167 facing away from the locking portion 1673 and matches the locking portion to form a lever structure. That is, when the elastic member 1675 applies a downward elastic force to the fastener 167, the fastener 167 takes the position of the through hole 1631 on the main compartment 163 as a pivot so that the locking portion 1673 applies an upward force to the stop portion 1632, thereby enabling the locking portion 1673 to be locked to the stop portion 1632.

When the user operates the operating portion 1671, the elastic force of the elastic member 1675 is overcome first so that the locking portion 1673 is disengaged from the stop portion 1632 and slides from the second surface 1632b to the first surface 1632a. The operating portion is operated so that the fastener 167 is disengaged from the through hole 1631 of the main compartment 163 and the second connector 166 extends across the stop, thereby enabling the second connector 166 to directly drive the compartment cover 164 to automatically rotate to the fully open state. When the compartment cover 164 needs to be closed, the user operates the compartment cover 164 to make the compartment cover 164 extend across the stop so that the second connector 166 enables the compartment cover 164 to be automatically reset to the closed position. In this case, the locking portion 1673 extends through the through hole 1631 on the main compartment 163 and slides from the first surface 1632a of the stop portion 1632 to the second surface 1632b of the stop portion 1632. Under the action of the elastic member 1675, the compartment cover 164 is locked by the fastener 167 to the stop portion 1632 of the main compartment 163.

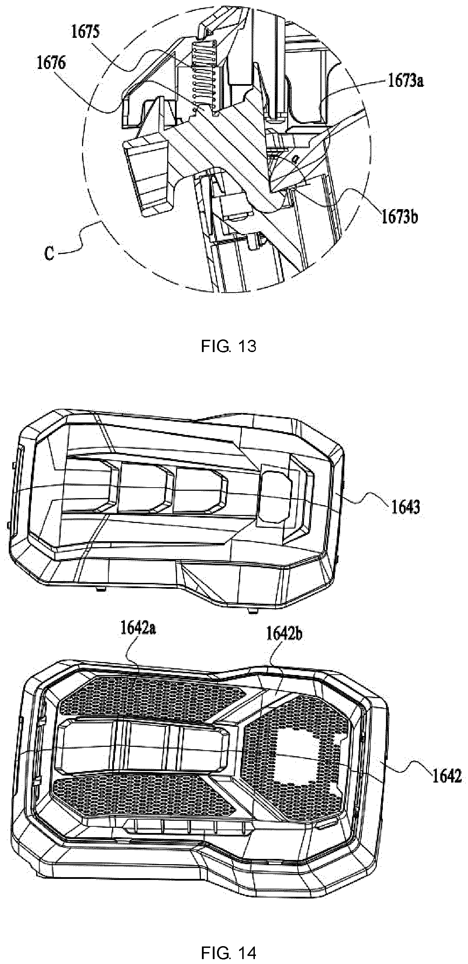

As shown in FIG. 14, the compartment cover 164 includes a first cover 1642 and a second cover 1643. The first cover 1642 is disposed on the side of the first cover 1642 facing the main compartment 163. The second cover 1643 is disposed on the side of the first cover 1642 facing away from the main compartment 163. The first cover 1642 is provided with a grid structure 1642a. On one hand, the battery pack 161 disposed in the main compartment 163 generates certain heat when working. The grid structure 1642a can effectively dissipate the heat in the main compartment 163. On the other hand, when the riding mower works in the sun, optical radiation causes the temperature in the main compartment 163 to rise. In this case, the grid structure 1642a can block most of the optical radiation, thereby mitigating the temperature rise in the main compartment 163. As an optional embodiment, the grid structure 1642a may be formed by through holes 1631 disposed on the first cover 1642. In the front and rear direction, the first cover 1642 has a Y-shaped body 1642b. The body 1642b plays a certain supporting role and can effectively maintain the structural strength of the first cover 1642. The grid is disposed outside the body 1642b and connects the body 1642b and the edge of the first cover 1642. The shape of the second cover 1643 fits the shape of the first cover 1642 and at least partially covers the first cover 1642. In fact, the second cover 1643 is a transparent member and may be made of transparent material. On one hand, the second cover 1643 helps the user observe the situation in the main compartment 163 through the grid structure 1642a. On the other hand, the combination of the second cover 1643 and the first cover 1642 enhances the structural strength of the entire compartment cover 164. In an embodiment, the arrangement of the first cover 1642 and the second cover 1642 enhances the structural strength of the compartment cover 164 so that the compartment cover 164 better protects the battery pack 161. Moreover, such a double-layer design enables different functions of the compartment cover 164 to be distributed to different cover bodies so that the first cover 1642 and the second cover 1643 generate different functions. In some embodiments, the combination of the first cover 1642 and the second cover 1643 implements the combination of different functions between different cover bodies. Moreover, different functions between different cover bodies do not affect each other.

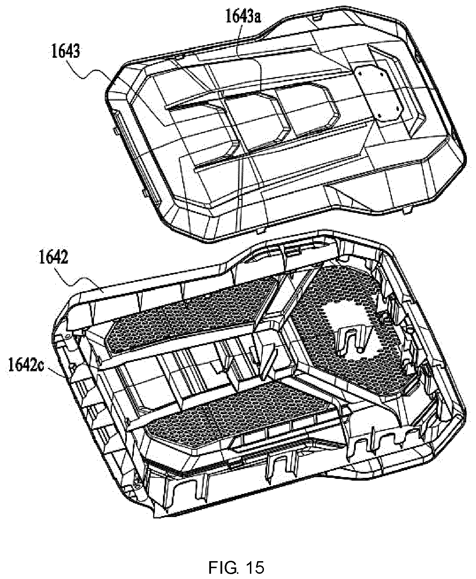

As shown in FIG. 15, a first reinforcing rib 1642c is formed on the side of the first cover 1642 facing the main compartment 163. The first reinforcing rib 1642c is mainly distributed in the body 1642b of the first cover 1642. In some embodiments, the first reinforcing rib 1642c is disposed above the main compartment 163 to effectively enhance the structural strength of the compartment cover 164 so that the battery pack 161 disposed in the main compartment 163 can be effectively protected by the compartment cover 164 and is not damaged due to being exposed to the outside. Moreover, the arrangement of the first reinforcing rib 1642c helps effectively reduce the overall weight of the compartment cover 164 so that the compartment cover 164 is lighter as the strength increases. In an embodiment, a second reinforcing rib 1643a is disposed on the side of the second cover 1643 facing the main compartment 163. The second reinforcing rib 1643a can enhance the strength of the second cover 1643 and make the second cover 1643 lighter. When the second cover 1643 and the first cover 1642 are combined, the second cover 1643 and the first cover 1642 have a higher strength and become lighter.

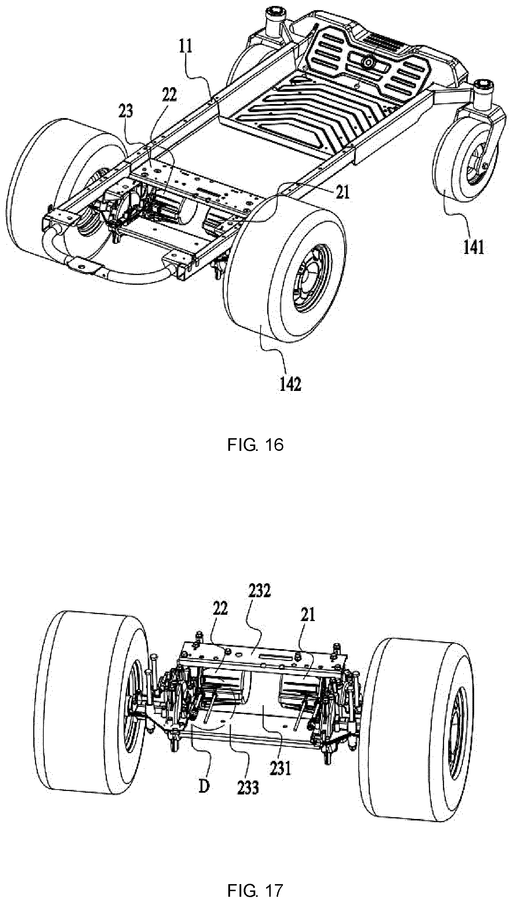

As shown in FIG. 16, the traveling assembly 14 may include first traveling wheels 141 and second traveling wheels 142. In the front and rear direction, the first traveling wheels 141 are disposed on the front side of the second traveling wheels 142. The traveling assembly 14 further includes a first drive assembly 21 and a second drive assembly 22 that are configured to drive the second traveling wheels 142 to rotate. In this case, when the first drive assembly 21 and the second drive assembly 22 drive the corresponding second traveling wheels 142 to rotate at different rotational speeds, a speed difference is generated between the two second traveling wheels 142, thereby causing the riding mower to turn. In some embodiments, in a symmetry plane extending in the direction of the first straight line 101, the first drive assembly 21 and the second drive assembly 22 are disposed symmetrically about the symmetry plane.

As shown in FIGS. 16 to 18, the first drive assembly 21 and the second drive assembly 22 are disposed on the main frame 11 by a connector. Since the traveling assembly 14 connected to the main frame 11 carries all the weight from the main frame 11, the second traveling wheels 142 disposed on the rear side carry most of the weight from the main frame 11. Moreover, the second traveling wheels 142 are connected to the main frame 11 through the first drive assembly 21 and the second drive assembly 22. Accordingly, the load from the main frame 11 is transmitted to the second traveling wheels 142 through the first drive assembly 21 and the second drive assembly 22. The first drive assembly 21 and the second drive assembly 22 that are disposed on the main frame 11 serve as two independent assemblies and each bear the load from the main frame 11 to make the junction between the second drive assembly 22 and the main frame 11. In an embodiment, a connection plate assembly 23 connecting the first drive assembly 21 and the second drive assembly 22 is provided. Optionally, when the connection plate assembly 23 is connected to the first drive assembly 21 and the second drive assembly 22, an accommodation space 231 that separates at least part of the upper space of the main frame 11 from at least part of the lower space of the main frame 11 and is located on the lower side of the main frame 11 is formed. The first drive assembly and the second drive assembly are disposed in the accommodation space 231. In this case, the upper space of the main frame 11 is effectively separated from the lower space of the main frame 11 so as to prevent the first drive assembly 21 and the second drive assembly 22 from interfering with related components in the upper space of the main frame 11.

In some embodiments, the connection assembly 23 includes a first connection plate 232 and a second connection plate 233. The first connection plate 232 is disposed on the upper side of the first drive assembly 21 and the upper side of the second drive assembly 22. The second connection plate 233 is disposed on the lower side of the first drive assembly 21 and the lower side of the second drive assembly 22. In some embodiments, the first connection plate 232 and the second connection plate 233 are each connected to a gearbox 211 of the first drive assembly 21 and a gearbox 211 of the second drive assembly 22. As an optional embodiment, the first connection plate 232 and the second connection plate 233 are disposed in parallel in an up and down direction perpendicular to the first straight line 101. Optionally, the first connection plate 232 and the second connection plate 233 may also be staggered in a straight-line direction perpendicular to the first straight line 101. Accordingly, the separation of the upper space of the main frame 11 from the lower space of the main frame 11 is implemented in a relatively large range. The arrangement of the first connection plate 232 and the second connection plate 233 enables the first drive assembly 21 and the second drive assembly 22 to be connected to the main frame 11 to form a whole, thereby significantly enhancing the stiffness in the junction between the first drive assembly 21 and the main frame 11 and the stiffness in the junction between the second drive assembly 22 and the main frame 11. Moreover, because the first drive assembly 21 and the second drive assembly 22 are connected to form a whole in this case, the stiffness of the first drive assembly 21 and the second drive assembly 22 is also enhanced. Accordingly, on the basis of not strengthening the original first drive assembly 21 and the second drive assembly 22, the structural strength of the first drive assembly 21 and the second drive assembly 22 can be enhanced significantly so that the first drive assembly 21 and the second drive assembly 22 can bear heavier loads. Additionally, due to the arrangement of the first connection plate 232 and the second connection plate 233, the accommodation space 231 that separates the upper space of the main frame 11 from the lower space of the main frame 11 is formed between the first connection plate 232 and the second connection plate 233. The gearbox 211 of the first drive assembly 21 and the gearbox 211 of the second drive assembly 22 are at least partially enclosed in the space between the first connection plate 232 and the second connection plate 233, preventing an external object from damaging a gearbox 211 and thus effectively extending the service life of the first drive assembly 21 and the service life of the second drive assembly 22. Moreover, such an arrangement also increases the complexity of the working environment that the riding mower 100 is able to adapt to. In some embodiments, the arrangement of the first connection plate 232 and the second connection plate 233 also plays a good positioning role for the first drive assembly 21 and the second drive assembly 22 so that the first driving assembly 21 and the second driving assembly 22 have good coaxiality and can be effectively secured to a preset position.

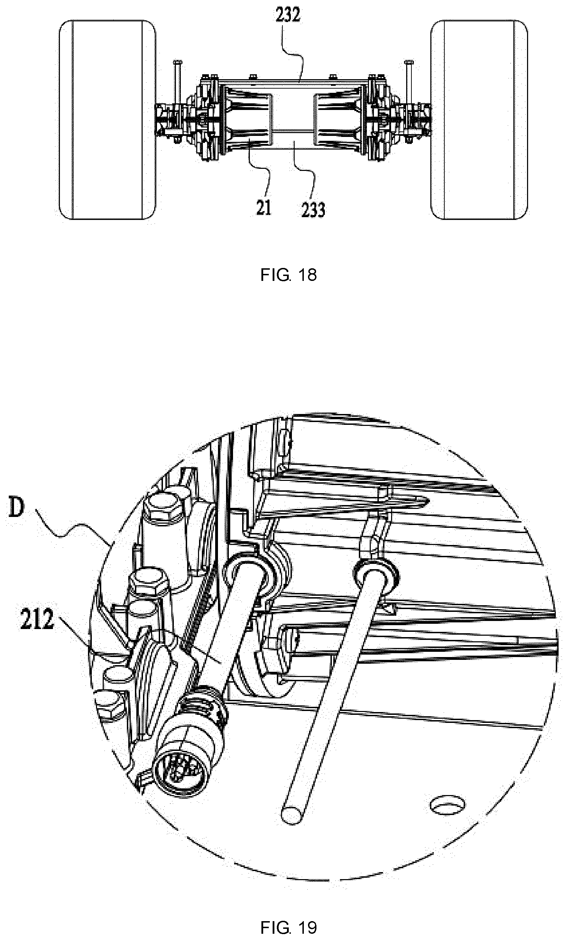

As shown in FIG. 19, with an aim of effectively controlling the first drive assembly 21 and the second drive assembly 22, the first drive assembly 21 and the second drive assembly 22 are further provided with a control circuit connected to the outside through a connection line 212. In this embodiment, the connection line 212 is disposed on the rear side of the first drive assembly 21 and on the rear side of the second drive assembly 22 and is located in the accommodation space 231 between the first connection plate 232 and the second connection plate 233. The arrangement in which the connection line 212 is disposed on the rear side of the first drive assembly 21 and on the rear side of the second drive assembly 22 and is located in the accommodation space 231 between the first connection plate 232 and the second connection plate 233, on one hand, enables the connection line 212 to be away from the power output assembly, prevents the connection line 212 from interfering with the power output assembly, and prevents the broken grass from being wound onto the connections line 212 and interfering with the connection line 212 in the working state. On the other hand, the arrangement in which the connection line 212 is disposed between the first connection plate 232 and the second connection plate 233 protects the connection line 212, prevents the connection line 212 from being exposed to the outside, and makes full use of the space on the rear side of the first drive assembly 21 and on the rear side of the second drive assembly 22 so that the arrangement of the entire mower is more reasonable. Finally, the arrangement in which the connection line 212 is disposed on the rear sides also facilitates detachment and maintenance with no need of detaching a front-end structure.

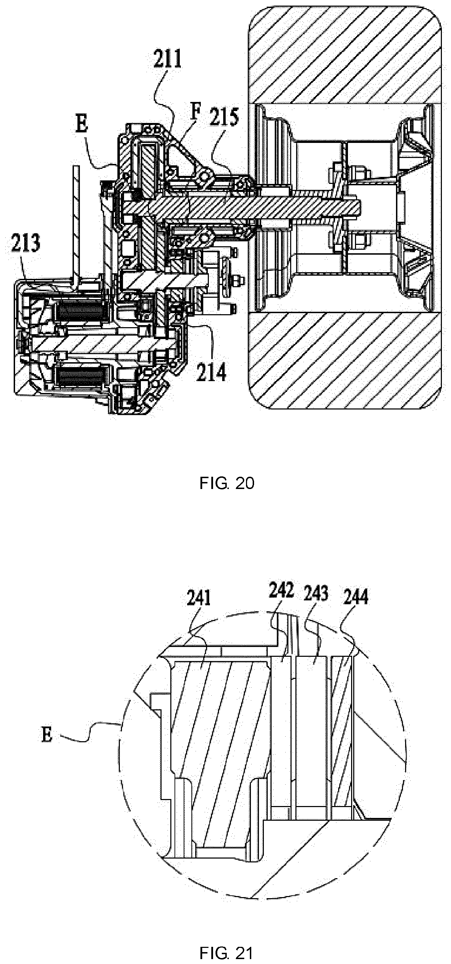

As shown in FIGS. 20 to 23, the first drive assembly 21 is taken as an example. The first drive assembly 21 includes a drive motor 213, a gear mechanism 214, and an output shaft 215. The drive motor 213 outputs power to the gear mechanism 214. The gear mechanism 214 transmits the power from the drive motor 213 to the output shaft 215 and drives the output shaft 215 to rotate. A second traveling wheel 142 is disposed on the output shaft 215 and rotates synchronously with the output shaft 215. When the riding mower 100 is in the working process, the first drive assembly 21 and the second drive assembly 22 are used for driving the riding mower 100 to travel forward or backward. When a differential is formed through the first drive assembly 21 and the second drive assembly 22 to implement a turning or when the riding mower 100 encounters a slope, the second traveling wheel 142 connected to the output shaft 215 transmits a relatively large axial force to the output shaft 215. The axial force presses the output shaft 215 to move axially or causes the second traveling wheel 142 to generate the force of being disengaged from the output shaft 215.

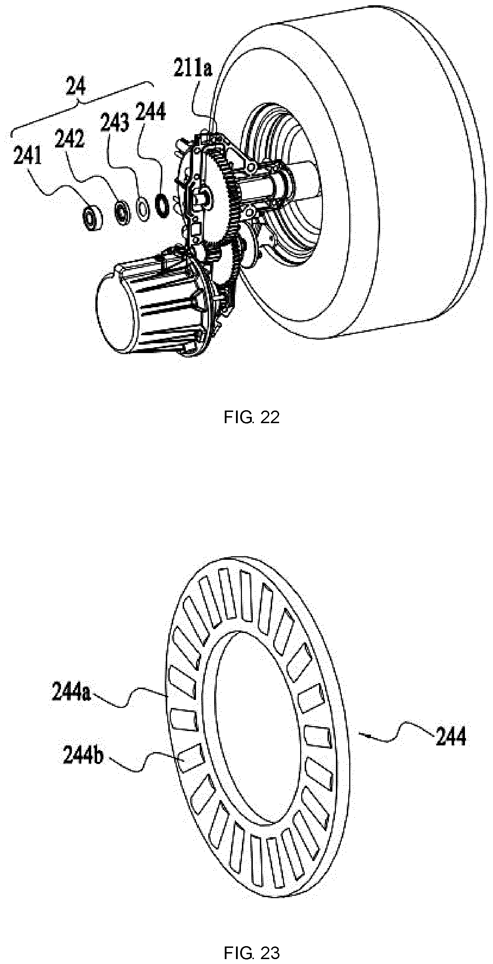

In order to prevent the axial force from pressing the output shaft 215 and causing severe wear in the junction between the output shaft 215 and the gearbox 211 under the action of the axial force, a first connection assembly 24 is further disposed in the junction between the output shaft 215 and the gearbox 211. The first connection assembly 24 may include a first bearing 241, a first gasket 242, a second gasket 243, and a retainer 244. The first bearing 241, the first gasket 242, the second gasket 243, and the retainer 244 are arranged sequentially in the direction of the output shaft 215 and are sleeved on the output shaft 215. The first bearing 214 is configured to support the end of the output shaft 215 facing away from the second traveling wheel 142. In fact, the gearbox 211 further includes a second bearing configured to support the output shaft 215 and disposed on the end facing the second traveling wheel 142. The first gasket 242 is disposed between the first bearing 241 and the second gasket 243 and is configured to secure the first bearing 241 and enable the first bearing 241 to have a preset distance relative to a transmission gear 211a on the output shaft 215. The retainer 244 is disposed between the second gasket 243 and the transmission gear 211a and configured to provide a reaction force opposite to the direction of the axial force so as to offset the wear of the transmission gear 211a, the first gasket 242, and the second gasket 243 when the axial force acts on the transmission gear 211a and the first bearing 241, that is, the first gasket 242 and the second gasket 243. The retainer 244 may be arranged as a thrust bearing and another component that can provide axial sliding friction. As an optional embodiment, the retainer 244 is a circular piece with thrust rollers 244b. As shown in FIG. 23, the retainer 244 is a ring 244a structure disposed around a central axis. The cylindrical rollers 244b are disposed on two sides of the ring 244a and around the central axis. In fact, the rollers 244b are embedded in the retainer 244 and at least partially exposed outside the surface of the ring 244a. It is to be understood that surfaces of the rollers 244b are smooth and continuous so that the rollers 244b are freely rotatable in the retainer 244, converting the static friction between the retainer 244 and the second gasket 243 or the static friction between the retainer 244 and the transmission gear 211a into sliding friction. Additionally, because the rollers 244b protrude from the plane where the ring 244a of the retainer 244 is located, the rollers 244b convert the static friction caused by the axial force of the output shaft 215 acting on the second gasket 243 or the transmission gear 211a into sliding friction, thereby effectively preventing the worn second gasket 243 and the worn retainer 244 from entering a gap between the transmission gear 211a, jamming the transmission gear 211a, and disabling the traveling function of the riding mower 100. Alternatively, it prevents the transmission gear 211a from being worn so as to affect the service life of the riding mower 100. In some embodiments, the arrangement of the retainer 244 effectively resolves the effect of the axial force along the output shaft 215 generated when the riding mower 100 turns or encounters an oblique road condition, thereby effectively extending the service life of the gearbox 211.

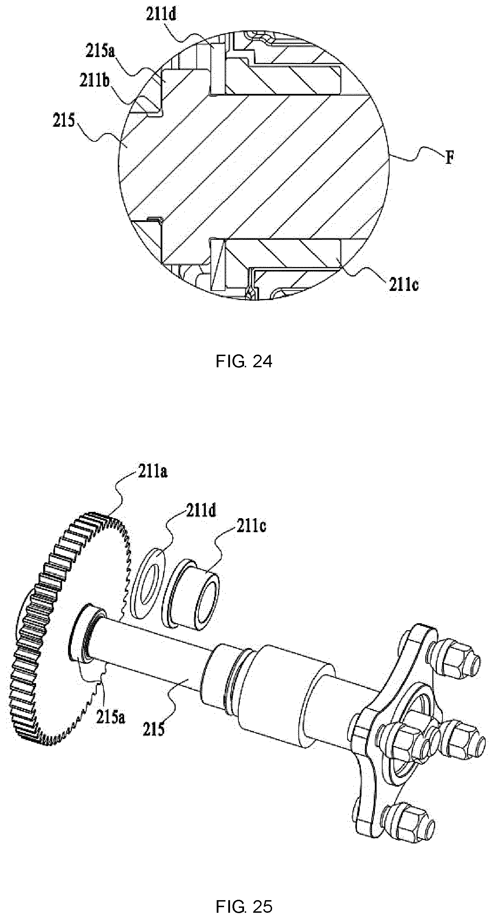

As shown in FIGS. 24 and 25, the output shaft 215 is further formed with a protrusion portion 215a. The protrusion portion 215a is disposed around the circumference of the output shaft 215. The diameter of the circumference where the protrusion portion 215a of the output shaft 215 is located is greater than the diameter of another portion of the output shaft 215. In an embodiment, the gearbox 211 is formed with an accommodation recess 211b configured to accommodate the protrusion portion 215a. The protrusion portion 215a basically fits the accommodation recess 211b and is limited within the range where the accommodation recess 211b is located. One end of the output shaft 215 is connected to the gearbox 211, and the other end is connected to the second traveling wheel 142. When the output shaft 215 encounters a slope, due to the action of the second traveling wheel 142, the relatively large axial force is applied to the output shaft 215 and causes a tendency for the output shaft 215 to be away from the gearbox 211. When the axial force is excessively large, driven by the second traveling wheel 142, the output shaft 215 may be disengaged from the gearbox 211, thereby causing the entire second traveling wheel 142 to be disengaged from the main frame 11 and thus causing a great potential safety hazard. In this case, the existence of the protrusion portion 215a offsets most of the axial force from the second traveling wheel 142, thereby effectively preventing the output shaft 215 from being disengaged from the gearbox 211. To avoid relatively large friction between the protrusion portion 215a and the gearbox 211, a sleeve 211c is disposed on the side of the protrusion portion 215a facing away from the transmission gear 211a. The sleeve 211c effectively restricts the axial displacement of the output shaft 215. In some embodiments, a third gasket 211d is disposed between the protrusion portion 215a of the output shaft 215 and the sleeve 211c. The third gasket 211d effectively prevents the protrusion portion 215a and the sleeve 211c from being worn under the action of the axial force.

As shown in FIG. 1, the first traveling wheels 141, the operating assembly, the power output assembly, the seat, the second traveling wheels 142, the power supply apparatus, and a grass catcher 25 are sequentially disposed on the riding mower 100 from the front side to the rear side. It is to be understood that the first traveling wheels 141 and the second traveling wheels 142 are mainly configured to support the main frame 11 and other components disposed on the main frame 11 and enable the riding mower 100 to travel. Each first traveling wheel 141 is disposed on the front end of the main frame 11. Each second traveling wheel 142 is disposed on the rear end of the main frame 11. The operating assembly, the power output assembly, and the seat are disposed between the first traveling wheels 141 and the second traveling wheels 142. Such an arrangement helps maintain the balance of the entire mower effectively, makes the coordination of various components more balanced, and facilitates the user in operating the riding mower 100. Two first operating elements 151 are included in the operating assembly and are basically symmetrically disposed on two sides of the main frame 11. In some embodiments, the first operating elements 151 are disposed at intermediate positions distributed in the front and rear direction and may be disposed on two sides of the seat. The second operating element in the operating assembly is disposed on the front side of the main frame 11 and may be located on the left side of the main frame 11 so that the user can control the riding mower 100 with just one foot. In an embodiment, the arrangement in which the second operating element is disposed on the front side of the main frame 11 and located on the left side of the main frame 11 reserves a relatively large space on the front side of the main frame 11, thereby enabling the user to move his leg freely.

As an optional embodiment, the power supply apparatus and the grass catcher 25 are disposed on the rear side of the main frame 11. In some embodiments, the power supply apparatus is disposed at a rear-side position adjacent to the second traveling wheels 142, and the grass catcher 25 is disposed on the upper side of the power supply apparatus. In this embodiment, since the power supply apparatus is provided with multiple battery packs, the power supply apparatus occupies a certain volume and has a certain mass. Because being provided with components including a cutting head and the drive motor 213, the power output assembly disposed between the first traveling wheels 141 and the second traveling wheels 142 has a certain volume and mass and is disposed on the lower side of the main frame 11. The power supply apparatus is disposed on the rear side adjacent to the second traveling wheels; accordingly, in a plane intersecting an extension plane of the main frame 11, the power supply apparatus and the power output assembly are disposed symmetrically about the plane. Such an arrangement effectively adjusts the counterweight of the riding mower 100, makes the ratio of the weight in the front and rear direction of the entire mower to the weight in the up and down direction of the entire mower more balanced, further stabilizes the riding mower 100, and effectively improves the stability and security in the operating process.

Additionally, the grass catcher 25 is disposed on the upper side of the power supply apparatus and at least partially extends to the rear side of the power supply apparatus so that the upper space of the power supply apparatus and the rear space of the power supply apparatus are utilized effectively. Under the premise of not interfering with other components of the riding mower 100, the space of the entire mower is utilized to the utmost extent. In an embodiment, the grass catcher 25 is connected to the main frame 11 through a group of connection rods. Such an arrangement enables the grass catcher 25 to make full use of the stereoscopic space on the upper side of the power supply apparatus and on the rear side of the power supply apparatus, not to contact the power supply apparatus, and not to squeeze the battery compartment 162 of the power supply apparatus. Moreover, the power supply apparatus and the grass catcher 25 are disposed in different stereoscopic space ranges, facilitating the user in adjusting or maintaining the power supply apparatus or the grass catcher 25 separately. In some optional embodiments, the riding mower 100 includes a grass catching mode and a grass discharging mode. When the riding mower 100 is in the grass catching mode, the grass catcher 25 is mounted on the upper side of the power supply apparatus. When the riding mower 100 is in the grass discharging mode, the grass catcher 25 is detached. In an embodiment, when the riding mower 100 is in the grass discharging mode, a sunshade may be disposed between the seat and the power supply apparatus. Through the connection rods, the sunshade is connected between the seat and the power supply apparatus. Accordingly, when the user operates the riding mower 100, the sunshade plays a relatively sound shielding role; moreover, the gap space between the seat and the power supply apparatus is better utilized.

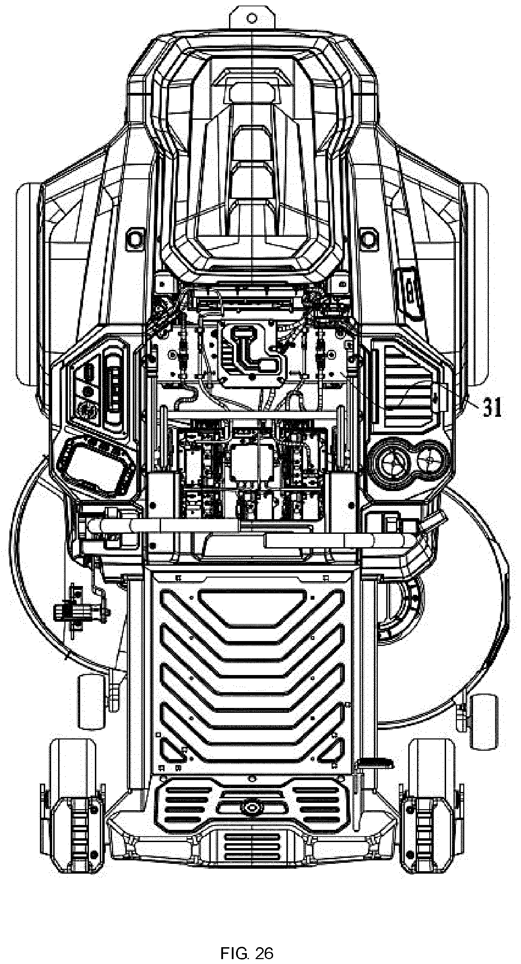

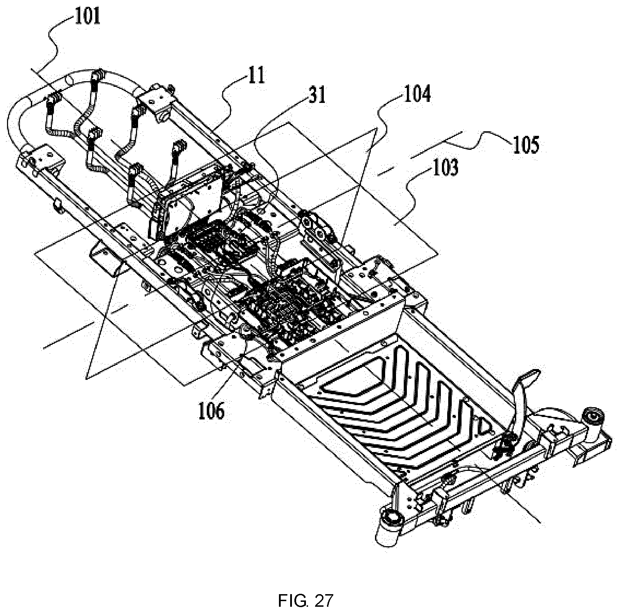

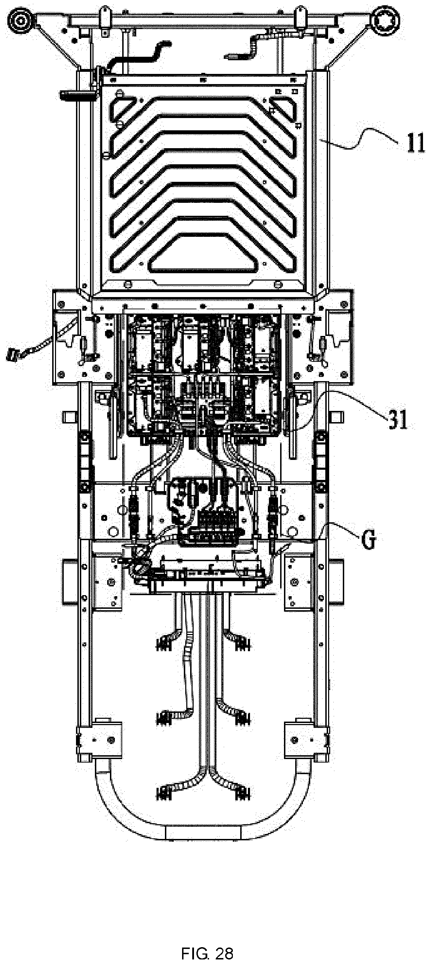

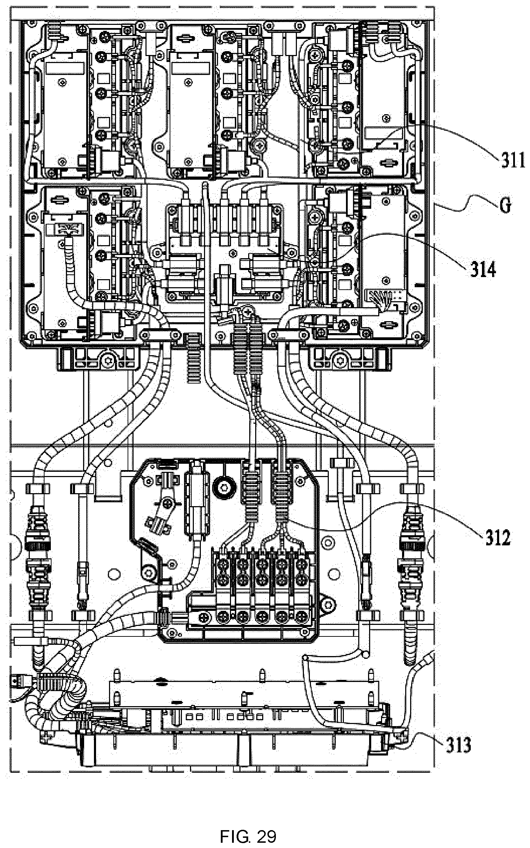

As shown in FIGS. 26 to 29, the riding mower 100 further includes a control module 31. The control module 31 is disposed on the lower side of the seat and serves as a control center to control the operation of the entire riding mower 100 and the operation of components electrically connected to the control module 31. The main frame 11 extends in a first plane 103. The first straight line 101 is located in the first plane 103. The main frame 11 is basically symmetrical about the first straight line 101. In the direction of a second straight line 105 extending in the left and right direction and parallel to the first axis 102, the main frame 11 is further basically symmetrical about the second straight line 105. The second straight line 105 is also located in the first plane 103. On a second plane 104 extending through the second straight line 105 and perpendicular to the first plane 103, the seat is disposed on the main frame 11 and at least partially extends through the second plane 104. The first straight line 101 and the second straight line 105 have an intersection 106. The control module 31 is basically located in the range of the intersection 106 between the first straight line 101 and the second straight line 105. That is, the control module 31 is basically disposed in the middle of the main frame 11 so that the wiring distance of a connection line connecting various components to the control module 31 is reduced. In some embodiments, the control module 31 includes a drive control board 311, a fuse 312, and a power supply management module 313. The drive control board 311 is configured to control components including the power output assembly and the traveling assembly 14. The power output assembly is disposed between the first traveling wheels 141 and the second traveling wheels 142 and adjacent to the intersection 106 between the first straight line 101 and the second straight line 105. The arrangement in which the drive control board 311 configured to control the power output assembly is disposed above the power output assembly helps effectively reduce the length of a connection line connecting the drive control board 311 and the power output assembly. On one hand, such an arrangement effectively simplifies wiring arrangement, fully utilizes the space, and reduces wiring complexity; on the other hand, such an arrangement facilitates maintenance. It is to be understood that a fault can be positioned rapidly on a relatively short connection line, thereby greatly shortening maintenance time and increasing the continuity of the user's operation of the riding mower 100.

The fuse 312 is connected between the drive control board 311 and the power supply management module 313. The fuse 312 is configured to protect a drive circuit and prevent a current overload from burning out, for example, a circuit or a motor. In some embodiments, the fuse 312 is at least partially located on the lower side of the seat and between the drive control board 311 and the power supply management module 313, thereby facilitating the user in maintenance or repair. In some embodiments, the power supply management module 313 is disposed on the rear side of the main frame 11, and the drive control board 311 is disposed on the lower side of the seat and is at least partially located at the intersection 106 between the first straight line 101 and the second straight line 105. Accordingly, the arrangement in which the fuse 312 is disposed between a power supply control module 31 and the drive control board 311 effectively reduces the length of a connection line between the fuse 312 and the power supply control module 31 and the length of a connection line between the fuse 312 and the drive control board 311, facilitating the user in maintenance or repair.

The power supply management module 313 is disposed on the rear side of the seat and is located between the seat and the power supply apparatus. The arrangement in which the power supply management module 313 has the closest position to the power supply apparatus enables the space between the seat and the power supply apparatus to be fully utilized and effectively reduces the length of a connection line between the power supply apparatus and the power supply management module 313, thereby simplifying the wiring arrangement of the entire control module 31 and effectively reducing the complexity of assembly and maintenance.

The control module 31 further includes a junction box 314 configured to connect a connection line from each component and connected to the drive control board 311 through the junction box 314. In some embodiments, the junction box 314 is disposed on the upper side of the drive control board 311, facilitating the electrical connection between the drive control board 311 and the power supply management module 313 and fully utilizing the space on the upper side of the drive control board 311. Through such a stereoscopic interactive design, under the premise of no interference between the junction box 314 and the drive control board 311, the space on the lower side of the seat can be effectively utilized, simplifying the assembly process, optimizing the design of wiring arrangement, and thereby greatly facilitating the user in use and maintenance.

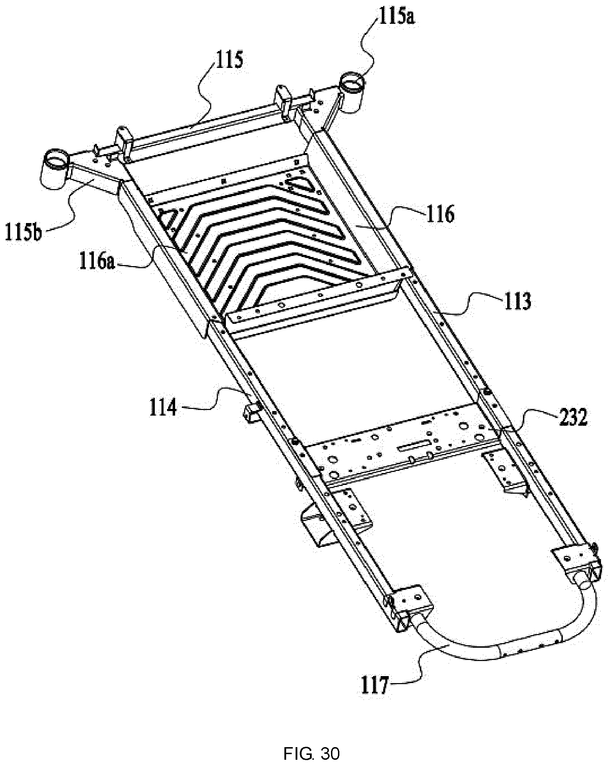

As shown in FIG. 30, the main frame 11 extends in the front and rear direction. In a projection plane perpendicular to the up and down direction, the projection of the main frame 11 in the up and down direction in the projection plane is basically rectangular. In some embodiments, the main frame 11 extends basically in a plane and is an integrated structure. The arrangement in which the main frame 11 extends in a plane effectively lowers the center of gravity of the main frame 11 and enables the center of gravity of the entire mower to be at a relatively low position when the main frame 11 is provided with various components. Additionally, the arrangement in which the main frame 11 is an integrated structure enhances the structural strength of the main frame 11 and reduces assembly steps. The main frame 11 also adopts a modular design and thus can meet the needs of different platforms.

In some embodiments, the main frame 11 includes a first rod 113, a second rod 114, and a third rod 115. The first rod 113 and the second rod 114 are parallel to each other and are parallel to the direction of the first straight line 101. The third rod 115 connects the first rod 113 and the second rod 114 and is located on the front side of the main frame 11. The first rod 113, the second rod 114, and the third rod 115 are securely connected or integrally formed. As an optional embodiment, the third rod 115 is provided with a connection hole 115a configured to connect the first traveling wheels 141. The connection hole 115a and the third rod 115 are securely connected or integrally formed. The junction between the third rod 115 and the first rod 113 and the junction between the third rod 115 and the second rod 114 are each provided with a reinforcing portion 115b. The reinforcing portion 115b may be a connection block in the shape of a right triangle and can increase the connection area between the third rod 115 and the first rod 113 and the connection area between the third rod 115 and the second rod 114, thereby enhancing the structural strength of the main frame 11. It is to be understood that the first rod 113, the second rod 114, and the third rod 115 may be securely connected or integrally formed. A third connection plate 116 is disposed between the first rod 113 and the second rod 114. The third connection plate 116 is disposed on the front side of the main frame 11 and is parallel to or intersects the second connection plate 233. The third connection plate 116 can match the first connection plate 232 and the second connection plate 233, making the main frame 11 more stable, enhancing the structural strength of the main frame 11, and enabling the main frame 11 to form a stable whole. The third connection plate 116 extends in a plane and is formed with a pedal portion 116a configured for being pressed down. An anti-collision rod 117 is disposed on the rear side of the first rod 113 and on the rear side of the second rod 114. The cross section of the anti-collision rod 117 is circular. When the power supply apparatus is mounted on the main frame 11, the anti-collision rod 117 is configured to surround the space where the power supply apparatus is located and is at least partially located outside the space where the power supply apparatus is located. In this case, when an external object impacts the riding mower 100, especially the power supply apparatus, the anti-collision rod 117 effectively avoids the direct impact of the external object and bears most of the kinetic energy, preventing the power supply apparatus, when being impacted, from being damaged and causing a certain potential safety hazard.

The main frame 11 is an enclosed frame structure surrounded by pipes with a rectangular section. The arrangement of the rectangular pipes enables each component connected to the pipes to have a relatively large connection surface with the main frame 11, thereby making the connection between each component and the main frame more stable. Moreover, such an arrangement facilitates the welding of the main frame 11 so that the main frame 11 has a large welding surface, thereby ensuring the overall stiffness of the main frame 11.

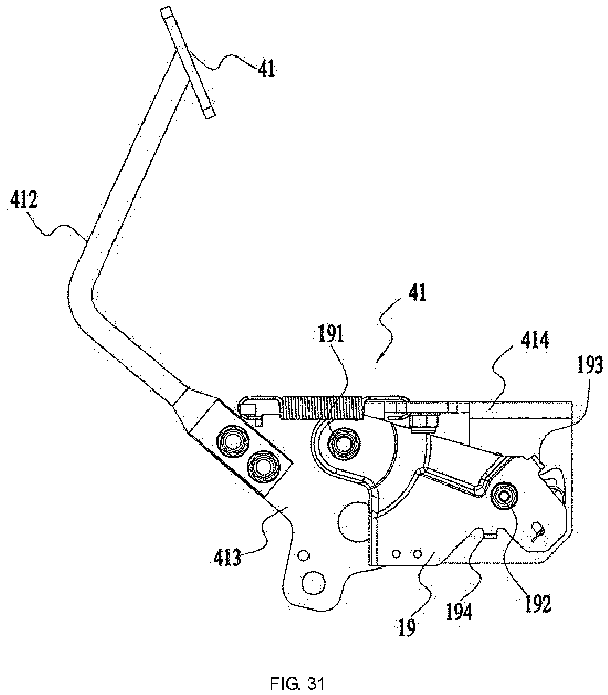

As shown in FIG. 31, in this embodiment, the riding mower 100 further includes a parking system. The parking system 41 includes a pedal 411, a pedal arm 412, a first rotatable member 413, a base 414, a ratchet 415, a first elastic member 416, a second elastic member 417, a second rotatable member 418, and a third rotatable member 419. The pedal 411, the pedal arm 412, and the first rotatable member 413 constitute a pedal assembly. In this embodiment, the pedal assembly is the second operating element. The pedal arm 412 includes two running sections. When the pedal 411 enables the pedal arm 412 to be in the first section, the riding mower 100 is in the non-parking state. When the pedal 411 enables the pedal arm 412 to be in the second section, the riding mower 100 is in the parking state.

As shown in the figure, a rotation stop system 42 matching the parking is disposed on the right side of the base 414. In some embodiments, the rotation stop system 42 includes a triggering member 421, a contact member 422, and a rotation stop switch 423. The triggering member 421 and the first rotatable member 413 are configured to rotate synchronously. In the rotation process of rotating with the first rotatable member 413, when rotating to the preset position, the triggering member 421 triggers the contact member 422. The contact member 422 triggers the rotation stop switch 423. The rotation stop switch 423 controls a second motor to stop rotation so that the power of the second traveling wheels 142 is cut. The second traveling wheels 142 are only subject to the braking action and thus can be braked quickly. It is to be explained here that the rotation stop switch 423 only controls the second motor to stop rotation in the triggered state. The rotation stop switch 423 does not control the rotation of the second motor in the case where the rotation stop switch 423 is not triggered or in the case where the contact member 422 is reset after the rotation stop switch 423 is triggered; that is, the rotation stop switch 423 can only pause the second motor. The triggering member 421 is formed with or is connected to a triggering portion 421a disposed at the preset position. In this embodiment, the triggering member 421 has a first section and a second section. The triggering portion 421a is disposed on the second section. In fact, the entire second section can trigger the triggering member 421; that is, the second section can be considered as the triggering portion 421a. The triggering member rotates in the first section and does not trigger the triggering contact 422. In some optional embodiments, the triggering portion 421a is disposed at a critical position for the riding mower 100 entering the parking state from the non-parking state. In fact, the triggering portion 421a may further be arranged before the riding mower 100 enters the parking state, thereby facilitating the user in braking.

In some embodiments, the base 414 is further formed with a slide rail extending through the base 414 in the left and right direction. The triggering member 421 is securely connected to the first rotatable member 413 by a fastening piece. The triggering member 421 rotates synchronously with the first rotatable member 413 and is within the range of the slide rail. In some optional embodiments, the slide rail includes a first slide rail 414a and a second slide rail 414b that are located in different rotation radii. The first slide rail 414a and the second slide rail 414b are each an arc centered on a point where the first central axis 102 extends through the base 414. The first slide rail 414a is closer to the preceding center compared with the second slide rail 414b. Therefore, the length of the first slide rail 414a is less than the length of the second slide rail 414b. The arrangement of two slide rails can make the connection between the triggering member 421 and the first rotatable member 413 more stable. In the rotation process of rotating with the first rotatable member 413, the triggering member 421 has no relative displacement from the first rotatable member 413.

## Claims

1. A riding mower, comprising:
a seat for a user to sit on;
a main frame extending in a direction of a first straight line and configured to carry the seat;
a mowing element configured to mow vegetation;
a traveling assembly configured to enable the riding mower to travel; and
an operating assembly configured to be operated by the user to control the riding mower to travel and output power,
wherein the traveling assembly comprises a first traveling wheel, a second traveling wheel, a first drive assembly, and a second drive assembly, wherein the first drive assembly and the second drive assembly are configured to drive the second traveling wheel to rotate, wherein
the first drive assembly and the second drive assembly are connected to the main frame by a connector and are disposed symmetrically about a symmetry plane parallel to the direction of the first straight line; and
wherein the traveling assembly further comprises a connection plate disposed in a direction of a line perpendicular to the direction of the first straight line and perpendicular to the symmetry plane, wherein the connection plate connects the first drive assembly and the second drive assembly and enables the first drive assembly and the second drive assembly to be connected into a whole.

2. The riding mower of claim 1, wherein
the first drive assembly and the second drive assembly each comprise a gearbox, and the connection plate is connected to the gearbox.

3. The riding mower of claim 1, wherein
when the connection plate is connected to the first drive assembly and the second drive assembly, an accommodation space that separates at least part of an upper space of the main frame from at least part of a lower space of the main frame and that is located on a lower side of the main frame is formed; and the first drive assembly and the second drive assembly are disposed in the accommodation portion.

4. The riding mower of claim 1, wherein
the connection plate comprises:
a first connection plate disposed on an upper side of the first drive assembly and on an upper side of the second drive assembly; and
a second connection plate disposed on a lower side of the first drive assembly and on a lower side of the second drive assembly.

5. The riding mower of claim 4, wherein
an accommodation space is formed between the first connection plate and the second connection plate, and the first drive assembly and the second drive assembly are disposed in the accommodation space.

6. The riding mower of claim 4, wherein
the first connection plate and the second connection plate are disposed in parallel in an up and down direction perpendicular to the first straight line.

7. The riding mower of claim 4, wherein
the first connection plate and the second connection plate are staggered in a straight-line direction perpendicular to the first straight line.

8. The riding mower of claim 3, further comprising a control circuit configured to control the first drive assembly and the second drive assembly and connected by a connection line.

9. The riding mower of claim 8, wherein
the connection line is disposed in the accommodation space.

10. The riding mower of claim 8, wherein
the connection line is disposed on a rear side of the first drive assembly in the accommodation space and on a rear side of the second drive assembly in the accommodation space.

11. A riding mower, comprising:
a seat for a user to sit on;
a main frame configured to carry the seat;
a mowing element configured to mow vegetation;
a traveling assembly configured to enable the riding mower to travel;
an operating assembly configured to be operated by the user to control the riding mower to travel; and
a power supply apparatus disposed on a rear end of the main frame, wherein
the power supply apparatus comprises a battery pack able to provide energy and a battery compartment configured to accommodate the battery pack, wherein
the battery compartment comprises a main compartment configured to accommodate the battery pack and a compartment cover configured to at least partially enclose the main compartment, the compartment cover comprises a first cover and a second cover, and the first cover comprises a body and a grid spreading around the body.

12. The riding mower of claim 11, wherein
the first cover and the second cover are detachably connected to each other.

13. The riding mower of claim 11, wherein
the second cover is a transparent member.

14. The riding mower of claim 11, wherein
a second reinforcing rib is disposed on a side of the second cover facing the main compartment.

15. The riding mower of claim 11, wherein
a first reinforcing rib is disposed on a side of the first cover facing the main compartment, the first cover is disposed on a side facing the main compartment, the second cover is disposed on a side of the first cover facing away from the main compartment, and the second cover at least partially covers the first cover.

16. The riding mower of claim 11, wherein
the grid is formed by through holes extending through the first cover.

17. The riding mower of claim 11, wherein
the body is Y-shaped, and the grid connects the body and an edge of the first cover.

18. The riding mower of claim 11, further comprising a support base, wherein the power supply apparatus is connected to the main frame by a group of support bases.

19. The riding mower of claim 18, wherein
the support base comprises:
a support portion configured to support the power supply apparatus;
a first connection portion configured to connect the power supply apparatus; and
a second connection portion configured to connect the main frame.

20. The riding mower of claim 11, wherein
a buffer is disposed between the power supply apparatus and the main frame.

21. A riding mower, comprising:
a seat for a user to sit on;
a main frame configured to carry the seat;
a mowing element configured to mow vegetation;
a traveling assembly configured to enable the riding mower to travel;
an operating assembly configured to be operated by the user to control the riding mower to travel and output power; and
a power supply apparatus disposed on a rear end of the main frame, wherein
the power supply apparatus comprises a battery pack able to provide energy and a battery compartment configured to accommodate the battery pack, wherein
the battery compartment comprises a main compartment configured to accommodate the battery pack and a compartment cover configured to at least partially enclose the main compartment, wherein
the compartment cover is provided with a fastener locked to the main compartment, the main compartment is formed with a matching stop portion, and the fastener comprises a locking portion, wherein a side of the locking portion facing the stop portion comprises a first edge and a second edge, and an included angle between the first edge and the second edge is greater than or equal to 60° and less than or equal to 90°.

22. The riding mower of claim 21, wherein
the included angle between the first edge and the second edge is 90°.

23. The riding mower of claim 21, wherein
the main compartment is formed with a through hole for the locking portion to extend through, and the stop portion extends along the through hole.

24. The riding mower of claim 21, wherein
the stop portion is formed with a channel for the locking portion to go through and a protrusion matching the locking portion.

25. The riding mower of claim 21, wherein
the compartment cover is formed with an accommodation recess configured to accommodate the fastener.

26. The riding mower of claim 25, wherein
the fastener further comprises:
a pivot portion for the fastener to rotate around, wherein the pivot portion is connected to the accommodation recess by a group of connection structures; and
an operating portion disposed between the pivot portion and the locking portion.

27. The riding mower of claim 21, further comprising an elastic member disposed between the fastener and the compartment cover.

28. The riding mower of claim 21, wherein
the locking portion has a first position and a second position that are relative to the stop portion; and
when the locking portion is at the first position, a locking hook abuts the stop portion and is able to hook the stop portion; and when the locking portion is at the second position, the locking hook is disengaged from the stop portion.

29. The riding mower of claim 21, wherein
the compartment cover is connected to the main compartment by a first connector and a second connector, the first connector is disposed on an end of the compartment cover and on an end of the main compartment, the compartment cover is able to rotate around the first connector and relative to the main compartment, the second connector is connected to a middle of the compartment cover and a middle of the main compartment, and the second connection portion is configured to support the compartment cover to make the compartment cover opened or closed relative to the main compartment.

30. The riding mower of claim 29, wherein
the second connector comprises a first connection end and a second connection end, the first connection end is disposed on the compartment cover, the second connection end is disposed on the main compartment, and a gas spring able to support the compartment cover to make the compartment cover opened or closed relative to the main compartment is disposed between the first connection end and the second connection end.

31. A riding mower, comprising:
a main frame;
a mowing element configured to mow vegetation;
a traveling assembly configured to enable the riding mower to travel; and
an operating assembly configured to be operated by the user to control the riding mower to travel and output power,
wherein the traveling assembly comprises a first traveling wheel, a second traveling wheel, a first drive assembly, and a second drive assembly, wherein the first drive assembly and the second drive assembly are configured to drive the second traveling wheel to rotate, wherein
the first drive assembly and the second drive assembly each comprise:
a drive motor configured to output a driving force;
a gear mechanism connected to the drive motor;
an output shaft configured to connect the gear mechanism and the second traveling wheel and able to drive the second traveling wheel to rotate; and
a gearbox configured to accommodate the gear mechanism and the output shaft,
wherein the gear mechanism comprises a transmission gear connected to the output shaft, the output shaft is connected to the gearbox by a first connection assembly, and the first connection assembly comprises a first bearing and a retainer, wherein the first bearing is distributed in an axial direction of the output shaft, and the retainer is disposed between the first bearing and the transmission gear.

32. The riding mower of claim 31, wherein
the retainer and the first bearing are sleeved on the output shaft; and
the riding mower further comprises a second bearing configured to secure the output shaft and disposed on an end of the output shaft facing the one second traveling wheel.

33. The riding mower of claim 31, wherein
the retainer is a ring disposed around the output shaft, and the ring is provided with thrust rollers able to rotate freely on the ring.

34. The riding mower of claim 33, wherein
the first connection assembly further comprises a first gasket and a second gasket, wherein the first gasket and the second gasket are disposed between the first bearing and the retainer.

35. The riding mower of claim 34, wherein
when the second gasket abuts the retainer, the thrust rollers are able to rotate relative to the second gasket.

36. The riding mower of claim 31, wherein
the output shaft is formed with a protrusion portion, and the protrusion portion is disposed between the transmission gear and the second traveling wheel and adjacent to the transmission gear.

37. The riding mower of claim 36, wherein
the protrusion portion is disposed around the output shaft, and a diameter of the protrusion portion is greater than a diameter of the output shaft.

38. The riding mower of claim 36, wherein
the gearbox is formed with an accommodation recess, and the protrusion portion is disposed in the accommodation recess.

39. The riding mower of claim 31, further comprising a sleeve disposed on a side of the protrusion portion facing away from the transmission gear.

40. The riding mower of claim 39, further comprising a third gasket disposed between the protrusion portion and the sleeve.

41. A riding mower, comprising:
a seat for a user to sit on;
a main frame extending in a direction of a first straight line and configured to support the seat;
a power output assembly configured to mow vegetation;
a traveling assembly configured to enable the riding mower to travel;
an operating assembly configured to be operated by the user to control the riding mower to travel and output power;
a control module configured to control the riding mower; and
a power supply apparatus configured to supply power to the riding mower,
wherein the main frame extends basically in a first plane, the first straight line is in the first place, and the main frame is basically symmetrical about the first straight line;
wherein the first plane further comprises a second straight line perpendicular to the first straight line, and the main frame is basically symmetrical about the second straight line; and
wherein on a second plane extending through the second straight line and perpendicular to the first plane, the seat is disposed on the main frame and at least partially extends through the second plane; the first straight line and the second straight line have an intersection; and the control module is at least partially disposed in a range of the intersection.

42. The riding mower of claim 41, wherein
the operating assembly comprises a first operating element and a second operating element, wherein the first operating element is disposed on two sides of the seat, and the second operating element is disposed on a front side of the main frame and is located on a left side of the main frame.

43. The riding mower of claim 41, further comprising a grass catcher, wherein the power supply apparatus is disposed on a rear side of the main frame, and the grass catcher is at least partially disposed on an upper side of the power supply apparatus.

44. The riding mower of claim 43, further comprising a group of connection rods connected to the main frame, wherein the connection rods are configured to support the grass catcher.

45. The riding mower of claim 44, comprising a grass catching mode and a grass discharging mode, wherein
when the riding mower is in the grass catching mode, the grass catcher is disposed on the upper side of the power supply apparatus; and
when the riding mower is in the grass discharging mode, the grass catcher is detached from the connection rods; and the connection rods are connected to a sunshade configured to shade from the sun.

46. The riding mower of claim 44, wherein
the connection rods are disposed between the seat and the power supply apparatus.

47. The riding mower of claim 41, wherein
the traveling assembly comprises a first traveling wheel and a second traveling wheel, the first traveling wheel is disposed on a front side of the main frame, the second traveling wheel is disposed on a rear side of the main frame, the power output assembly is disposed between the first traveling wheel and the second traveling wheel and is at least partially located on a lower side of the main frame, and the power supply apparatus is disposed on a rear side of the second traveling wheel and is located on an upper side of the main frame.

48. The riding mower of claim 41, wherein
the control module comprises:
a drive control board at least partially disposed at the intersection between the first straight line and the second straight line;
a power supply management module at least partially disposed between the seat and the power supply apparatus; and
a fuse disposed between the drive control board and the power supply management module.

49. The riding mower of claim 48, wherein
the drive control board, the fuse, and the power supply management module are basically arranged in the first straight line.

50. The riding mower of claim 48, wherein
the control module further comprises a junction box disposed on an upper side of the drive control board.

51. A riding mower, comprising:
a seat for a user to sit on;
a main frame configured to carry the seat;
a mowing element configured to mow vegetation;
a traveling assembly configured to enable the riding mower to travel;
an operating assembly configured to be operated by the user to control the riding mower to travel and output power; and
a power supply apparatus configured to supply power to the riding mower,
wherein the main frame is disposed in a first plane and extends in a direction of a first straight line; when being mounted, the power supply apparatus is located in an extension plane of the main frame; and the main frame is provided with an anti-collision rod disposed around the power supply apparatus and located on an outer side of the main frame.

52. The riding mower of claim 51, wherein
the anti-collision rod is connected to a rear side of the main frame and is basically semicircular.

53. The riding mower of claim 51, wherein
a cross section of the anti-collision rod is circular.

54. The riding mower of claim 51, wherein
the main frame comprises a first rod, a second rod, and a third rod, wherein the first rod and the second rod are parallel to each other; the third rod is disposed on a front end of the first rod and on a front end of the second rod; and the first rod, the second rod, and the third rod are securely connected or integrally formed.

55. The riding mower of claim 54, wherein
the third rod is formed with or connected to a connection hole configured to connect the traveling assembly; and a junction between the third rod and the first rod and a junction between the third rod and the first rod are each provided with a reinforcing portion.

56. The riding mower of claim 54, wherein
the anti-collision rod is connected to the first rod and the second rod.

57. The riding mower of claim 54, further comprising a first connection plate and a second connection plate that connect the first rod and the second rod, wherein the first connection plate is parallel to or intersects the second connection plate.

58. The riding mower of claim 57, wherein
the first connection plate extends in a plane and is formed with a pedal portion configured for being pressed down.

59. The riding mower of claim 51, wherein
in a projection plane perpendicular to an up and down direction, a projection of the main frame in the up and down direction in the projection plane is basically rectangular.

60. The riding mower of claim 51, wherein
a cross section of the main frame is rectangular.

61. A riding mower, comprising:
a seat for a user to sit on;
a main frame configured to carry the seat;
a power output assembly connected to the main frame and comprising a mowing element and a first motor, wherein the mowing element is configured to output power to implement a mowing function, and the first motor is configured to drive the mowing element to output the power;
a traveling assembly at least able to drive the electric riding mower to travel in a direction of a first straight line on ground, wherein the traveling assembly comprises a second motor configured to drive the traveling assembly;
an operating assembly configured to be operated by the user to control the riding mower to travel and output the power;
a parking system enabling the riding mower to switch between a parking state and a non-parking state, wherein when the parking system is locked, the riding mower is in the parking state; and when the parking system is not locked or is unlocked, the riding mower is in the non-parking state; and
a rotation stop system linked to the parking system, wherein when the parking system enters a locked state from an unlocked state, the rotation stop system is triggered and controls the second motor to stop rotation.

62. The riding mower of claim 61, wherein
the parking system comprises:
a pedal assembly configured to be operated by the user to implement a switch between the parking state and the non-parking state;
a base configured to be mounted with the pedal assembly;
a ratchet securely connected to the pedal assembly; and
a first elastic member connecting the pedal assembly and the base.

63. The riding mower of claim 62, wherein
the pedal assembly comprises:
a pedal for the user to press down;
a first rotatable member connecting the pedal assembly and rotatable around a central axis synchronously; and
a pedal arm, wherein two ends of the pedal arm are securely connected to the pedal and the first rotatable member respectively.

64. The riding mower of claim 63, wherein
the rotation stop system comprises:
a triggering member formed with or connected to a triggering portion;
a contact member matching the triggering portion; and
a rotation stop switch matching the contact member and, when being triggered by the contact member, controlling the second motor to stop the rotation.

65. The riding mower of claim 64, wherein
the triggering member and the first rotatable member are configured to rotate synchronously.

66. The riding mower of claim 65, wherein
the triggering member comprises a first section and a second section, wherein the triggering portion is disposed on the second section.

67. The riding mower of claim 63, wherein
the base is provided with a slide rail extending through the base, the triggering member is connected to the first rotatable member by a fastening piece, the triggering member is disposed on one side of the base, and the first rotatable member is disposed on another side of the base.

68. The riding mower of claim 67, wherein
the slide rail comprises a first slide rail and a second slide rail that are disposed in different rotation radii.

69. The riding mower of claim 68, wherein
a length of the first slide rail is smaller than a length of the second slide rail.

70. The riding mower of claim 64, wherein
the rotation stop switch is configured to control the second motor to stop the rotation when the rotation stop switch is held in a triggered state.
